# EUROPEAN PATENT APPLICATION

(11) **EP 1 132 829 A2**
(43) Date of publication of application: **12.09.2001**
(21) Application number: 01100050.2
(22) Date of filing: 09.01.2001
(51) Int. Cl.: G06F 15/02

(54) **Electronic book system and its contents display method**

(30) Priority: 12.01.2000 JP 2000003721
(71) Applicant: Hitachi, Ltd., Chiyoda-ku, Tokyo 101-8010 (JP)
(72) Inventor: Ishibashi, Atsushi, c/o Hitachi, Ltd.,, Chiyoda-ku, Tokyo 100-8220 (JP); Kosukegawa, Yuichi, c/o Hitachi, Ltd.,, Chiyoda-ku, Tokyo 100-8220 (JP); Takano, Masaki, c/o Hitachi, Ltd.,, Chiyoda-ku, Tokyo 100-8220 (JP); Tsukada, Yujin, c/o Hitachi, Ltd.,, Chiyoda-ku, Tokyo 100-8220 (JP); Minemoto, Takeshi, c/o Hitachi, Ltd.,, Chiyoda-ku, Tokyo 100-8220 (JP); Arai, Tatsuro, c/o Hitachi, Ltd.,, Chiyoda-ku, Tokyo 100-8220 (JP)
(74) Representative: Beetz & Partner Patentanwälte

(57) **Abstract**

The invention relates to an electronic book system (a contents display method) that functionally or efficiently displays information related to reading or advertisement in a small display area on a display of a portable reading terminal, the portable reading terminal receives digitized book contents and digitized related information proper to the contents via the Internet and the related information is displayed together with the book contents on the portable reading terminal by operating a button of the portable reading terminal or operator guidance on the display screen. The electronic book system is composed of a provider 1 provided with a book contents server 2 that stores digitized book contents and the related information, a bookshelf server 3 that temporarily deposits a book from a user and a management server 4 that manages the personal information of users and the portable reading terminal 6 provided with CPU, a screen display and a nonvolatile storage including a book contents storage, a reading situation manager and a viewer.

## Description

### BACKGROUND OF THE INVENTION

The present invention relates to technology for mechanically or efficiently displaying contents (information contents displayed on a portable terminal) related to reading in a small display area on a display in mobile environment such as a portable reading terminal or PDA.

Technology for digitizing the contents of a book printed on paper and displaying the digitized contents on a portable terminal using CD-ROM or via a telecommunication line for reading is well-known as the reading object of books including a novel having a dictionary as its typical example.

In this well-known technology, it is not considered to also display additional information contents except original contents such as the contents of a novel though it is natural that the contents of a dictionary or a novel for example are displayed on a small display of a portable terminal. However, for additional information, in the case of a novel for example, it is already proposed that a marker is put on a page being read and the page is a first opened page in rereading.

In conventional type technology, in a portable terminal used for displaying the contents of a book, as displayed contents are mainly the contents of the book themselves and a marker is put and utilized at most, a book printed on paper is merely displayed on a portable terminal and a merit acquired by digitizing the contents of the book is not utilized enough.

### SUMMARY OF THE INVENTION

The invention provides an electronic book system that provides useful contents (the information of all contents displayed on a portable terminal including the contents of a book and information related to the contents) by preparing and generating related information related to the contents of the book when the contents of the book are digitized and can enrich displayed contents by displaying this related information on a portable terminal at the same or alternate time as the contents of the book, its contents display method and its contents provision method.

In the contents display method of the electronic book system according to the invention, to solve the problem described above, the related information is displayed together with the book contents by receiving digitized book contents and digitized related information proper to the contents by a portable reading terminal via the Internet and pressing a button of the portable reading terminal or operating an operator guidance panel on the display screen.

Also, information received by the portable reading terminal via the Internet is displayed by displaying the layout heading of a newspaper or a magazine of books, reading character data equivalent to a selected article of the layout heading by selecting the article and overlapping the character data on the heading displaying the layout heading in the form of a pull-down menu. Or the advertising information is displayed on the screen every time a page of the book contents is turned. Or a retrieval list which is a result of retrieving the contents of books is displayed by selecting a suitable sentence or phrase on the screen displaying the contents of books and selecting retrieval in an operational menu display field and the corresponding page is displayed by selecting a suitable item in the retrieval list. Or the already read pages and the residual pages of the corresponding book are acquired by selecting the display of a reading situation in an operational menu display field of the screen displaying the contents of books and the respective numbers of the read pages and the residual pages and its ratio are displayed. Or an operational menu display field for specifying operation including book purchase operation via the Internet, the transfer operation of a book temporarily deposited with a provider and the jump operation of the display screen is provided on the display screen and the operational menu display filed is set so that various operational menus are turned, any is displayed and selection is performed.

Also, to achieve the object, the electronic book system according to the invention is provided with a provider server and a portable reading terminal respectively connected via a telecommunication line, the provider server is provided with a book contents subserver that stores digitized book contents and the related information, a bookshelf subserver that temporarily deposits a book selected by a user and a management subserver that manages the personal information of users, and the portable reading terminal is provided with CPU, a screen display and a nonvolatile storage having a book contents storage, a reading situation manager and a viewer.

Also, in the electronic book system according to the invention, to achieve the object, the provider server of the electronic book system that provides various information to plural reading terminals via a telecommunication line is provided with a book contents subserver that stores digitized book contents and the related information, a book subserver that receives book data from a user and temporarily deposits it and a management subserver that manages the personal information of users.

Further, to achieve the object, a method of providing contents in the electronic book system according to the invention is provided with a step for accepting a request for the purchase of a digitized book from the reading terminal, a step for supplying the digital information of the book to the reading terminal based upon the acceptance of the purchase, a step for accepting a request for the temporary deposit of the purchased book from the reading terminal and storing the book information and a step for receiving a request for the provision of the temporarily deposited book from the reading terminal and providing the digital information of the book to the reading terminal in the management system of the electronic book system that provides various information to plural reading terminals via a telecommunication line.

### BRIEF DESCRIPTION OF THE DRAWINGS

Fig. 1 shows the whole configuration of an electronic book service system via a network;
Fig. 2 shows one example of the configuration considering the facility of a portable reading terminal 6;
Fig. 3 is a block diagram showing an electronic book system;
Figs. 4A to 4C show a procedure of a series of operation in the portable reading terminal;
Figs. 5A to 5C show a procedure of a series of operation respectively following Figs. 4A to 4C in the portable reading terminal;
Figs. 6A and 6B show a screen display example in the reading terminal;
Figs. 7A to 7D show contents display proper to a novel of books;
Fig. 8 shows contents display proper to a newspaper of books;
Fig. 9 shows contents display proper to a magazine of books;
Figs. 10A and 10B respectively show one display type for displaying advertisement on a book;
Figs. 11A and 11B respectively show another display type for displaying advertisement on a book;
Figs. 12A to 12C respectively show the other display type for displaying advertisement on a book;
Fig. 13 shows the display screen for operation for partial purchase which can be executed by the reading terminal;
Fig. 14 shows the display screen for operation for the retrieval of all sentences which can be executed by the reading terminal;
Fig. 15A shows the display screen for operation for a link into a sentence which can be executed by the reading terminal and Fig. 15B shows the display screen for operation for a link to a Web site which can be executed by the reading terminal;
Fig. 16A shows the display screen for operation for the version up of contents which can be executed by the reading terminal and Fig. 16B shows the display screen for operation for hyperlink contents display which can be executed by the reading terminal;
Fig. 17 shows the display screen for operation for purchase, the subscription of the next number and partial purchase which can be executed by the reading terminal;
Fig. 18 shows the display screen for operation for displaying the situation of reading which can be executed by the reading terminal;
Fig. 19A shows the display screen for operation for labeling which can be executed by the reading terminal and Fig. 19B shows the display screen for operation for the retrieval of a label which can be executed by the reading terminal;
Fig. 20A shows the display screen for operation for menu display which can be executed by the reading terminal and Fig. 20B shows the display screen for operation for normal menu display which can be executed by the reading terminal:
Fig. 21A shows operation when text is converted to voice which can be executed by the reading terminal and Fig. 21B shows the processing flow;
Figs. 22A and 22B respectively show the flow of the operation of the reading terminal;
Fig. 23A shows the flow of operation for switching the layout headline and the title article headline respectively of a newspaper and Fig. 23B shows the flow of operation for overlap text display in which a space image of a magazine is utilized;
Fig. 24A shows the flow of operation for position fixed display in which maximum display is performed every time a page is turned and Fig. 24B shows the flow of operation for hyperlink advertisement display;
Fig. 25 shows the flow of operation when a table of contents dedicated to advertisement is displayed;
Fig. 26A shows the flow of operation for advertising display consistent with the contents of a page, Fig. 26B shows the flow of operation for bookmark display including advertisement and Fig. 26C shows the flow of operation for band (cover) display including advertisement;
Fig. 27 shows the flow of operation for partial purchase processing;
Fig. 28 shows the flow of operation when a link into a sentence in the retrieval of all sentences is displayed;
Fig. 29 shows the flow of operation when a link to a Web site (via the Internet) is displayed;
Fig. 30 shows the flow of operation when processing for the version up of the contents is executed;
Fig. 31 shows the flow of operation for hyperlink contents display;
Fig. 32 shows the flow of operation when processing from the subscription of the next number to partial purchase is executed;
Fig. 33 shows the flow of operation for reading situation display;
Fig. 34 shows the flow of operation when processing for labeling and display is executed;
Figs. 35A and 35B respectively show the display screen for another operation which can be executed by the reading terminal; and
Figs. 36A to 36C respectively show the display screen for the other operation which can be executed by the reading terminal.

### DESCRIPTION OF THE PREFERRED EMBODIMENTS

Referring to the drawings, the contents display of an electronic book using a portable terminal in embodiments of the invention will be described below. The electronic book is acquired by digitizing a book printed on paper and published or is book contents generated with digitization on the premise, is a service system for distributing via a network or a small-sized record medium, displays the information of all display contents on a portable terminal including book contents and the related information on the display of mainly the portable reading terminal, PDA and others and enables reading or retrieval.

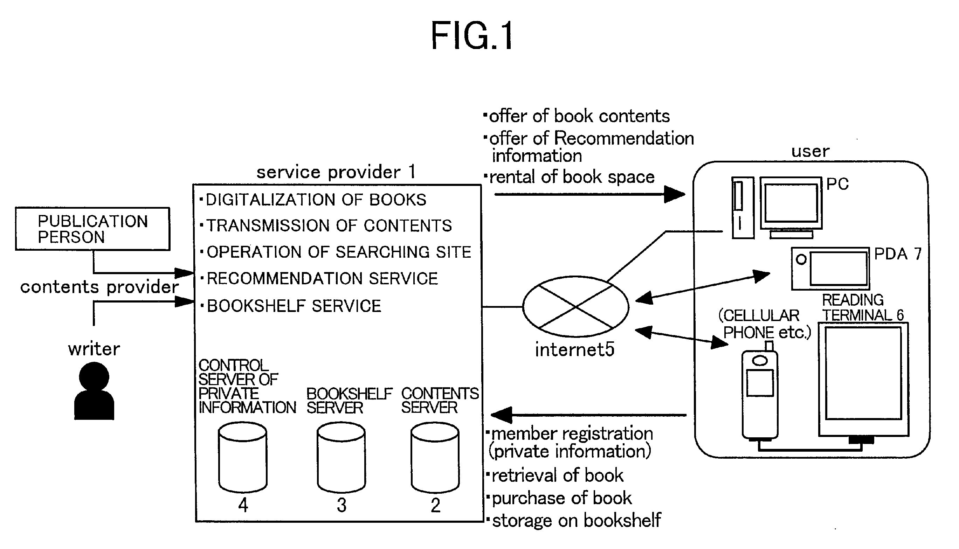

Fig. 1 shows the whole configuration of an electronic book service system via a network. A user of electronic books is provided book contents or recommended information via a network including the Internet 5, instructs provided information (contents) to be displayed on the display screen of a portable reading terminal 6, PDA 7 or a personal computer (PC) and reads the provided information (contents).

In the meantime, a service provider 1 receives contents from a writer and a publisher and provides the information to a user, detailedly speaking, the service provider is provided with a function for digitizing book contents provided from a writer or a publisher and the related information (described later) such as the correlation diagram of the characters in a novel for example and advertisement, that is, contents and sending the contents to a user, is further provided with the operating function of a retrieval site (a home page) of books including a novel, a newspaper or a magazine and the related information or a recommendation service (recommendation menu service) function every user according to the reading history and field of the user and is furthermore provided with a bookshelf service function for temporarily depositing book data purchased by a user.

To realize the functions of the service provider described above, a contents server 2 that stores contents to use them for retrieval, a bookshelf server 3 that temporarily deposits the title and the contents of a book purchased by a user and a personal information management server 4 that manages the personal information of the user that purchased the electronic book are provided to the service provider 1.

Contents and recommended information are provided to a user from the provider 1 and bookshelf space is also provided for nothing or at rent (it may be inconvenient to store the enormous data of purchased books on the side of a user). Also, a user is to provide the information of registration as a member, the purchase of a book, the retrieval of books and storage on a bookshelf to the provider via the Internet 5.

Further, the service provider is managed by charges for display from publishers, a fee from a user at the time of purchase, advertisement charges from ad agencies, membership fees from users, tolls of a bookshelf and others. According to this system, as a writer can use various stage effects described later without damaging the effect by the publication of books printed on paper, he/she can create such works as produce user's will to purchase them and interest him/her. Also, a publisher can reduce the cost for printing on paper and carrying books to general bookstores and can reduce the cost for advertisement. Also, as a publisher can appeal to users utilizing many chances as described later, it can enhance the efficiency of advertisement. Further, a user can easily select a necessary book in much book information, can read a book of some interest owing to various stage effects and can purchase these books at a low price. Further, advertisement can be received without a sense of incompatibility and the details of advertising information can be easily acquired.

As the service provider can get much book information at a low price or for nothing from many publishers, it can acquire many users. Hereby, as the service provider can take on the advertisement of many publishers, it can acquire much funds for management. As a result, the cost paid by users can be reduced. The service provider can efficiently manage the system owing to this multiplier effect.

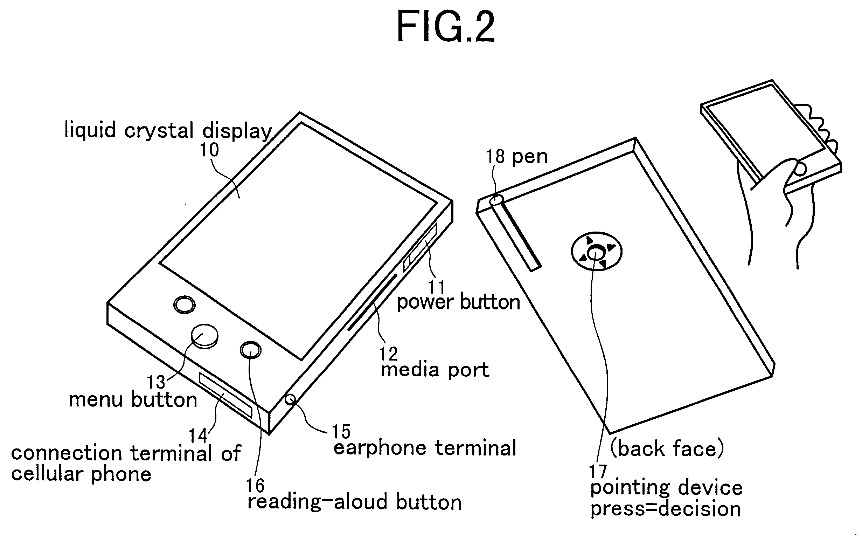

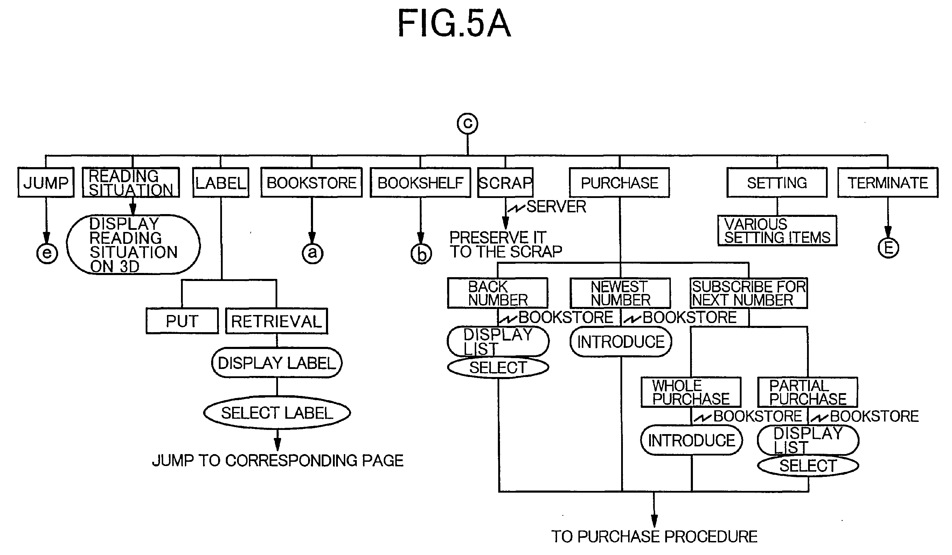

Fig. 2 shows one example of the configuration considering the facility of the portable reading terminal 6. For example, for the portable reading terminal 6 in this embodiment, the outline dimension is substantially equal to that of a paperback (W 105 x H 150 x D 15 mm) and the dimension of the screen of the liquid crystal display 10 is (W 86.5 x H 117 mm). Hereby, as the portable reading terminal can be treated as a paperback, it is convenient. A menu button 13 for enabling various operations (see Fig. 5A for the contents of a menu), a connecting terminal 14 for connecting to a mobile telephone, a reading-aloud button 16 for reading aloud, a power button 11, an earphone terminal 15 and a medium slot 12 for inserting a small-sized storage medium are provided to the surface and the side of the portable reading terminal 6, and a pointing device 17 for selecting various functions to be enabled by pressing and a touch pen 18 are provided to the back.

The portable reading terminal 6 downloads contents related to a book from the service provider onto a built-in storage for temporary storage via the Internet and displays them on the liquid crystal display 10. The basic operation for reading can be executed with one hand by operating the menu button and the pointing device. Further, operation similar to the basic operation is also enabled using the touch pen 18.

For example, in the portable reading terminal 6 in this embodiment, the liquid crystal display 10 is arranged so that it is large for the body by arranging the liquid crystal display 10 on one side of the longitudinal direction on one surface of the thin and flat body with the display one-sided and arranging the menu button 13 and the reading-aloud button 16 respectively frequently used in a plane part formed on the other side in the longitudinal direction, the plainness is enhanced realizing miniaturization and operability with one hand is enhanced. Particularly in this embodiment, a cursor displayed on the liquid crystal display 10 is moved in a tilted direction by tilting in all directions in the direction of the back of the liquid crystal display 10 and the pointing device 17 by strongly pressing which contents selected by the cursor are executed is provided. Hereby, as shown in Fig. 2, the menu button 13 and others are operated with the thumb for example, holding the body with the thumb and another finger with the body held between the fingers and the pointing device 17 can be operated with the forefinger. Hereby, the body can be operated with the holding hand, supporting the body with one hand.

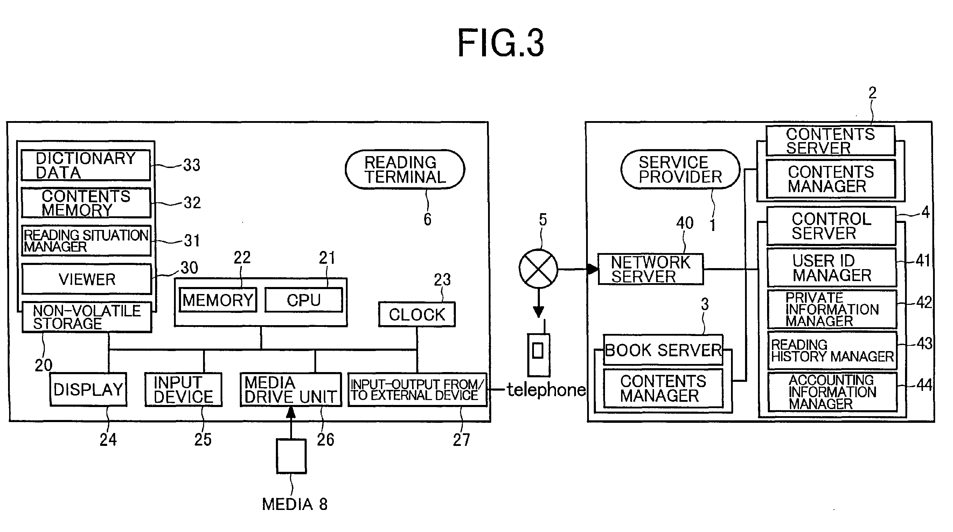

Fig. 3 is a block diagram showing the electronic book system. Data to the portable reading terminal 6 is input from the small-sized storage medium 8 or a telecommunication line via the Internet 5. The portable reading terminal 6 is composed of a nonvolatile storage 20, CPU 21, its memory 22, a clock 23, a display 24, an input device 25, a medium driver 26 and an external input-output device 27, and the nonvolatile storage 20 is provided with a viewer 30, a reading situation manager 31, a contents storage 32 and dictionary data 33. The viewer 30 is provided with a function for instructing the operational flow of the portable reading terminal 6 and the CPU 21 executes a series of operational flow for reading an electronic book such as display and an instruction for the purchase of a book, the retrieval based upon a key word of the book, the selection of the book in a book list, the selection of partial purchase or the whole purchase, storage on a bookshelf and storage on a medium installed in the terminal respectively described later according to the operational flow.

In the meantime, the service provider 1 is composed of the personal information management server 4, the bookshelf server 3 and the contents server 2 based upon a network server 40. The personal information management server 4 is provided with a user ID manager 41, a personal information manager 42, a purchase history manager 43 and an accounting information manager 44.

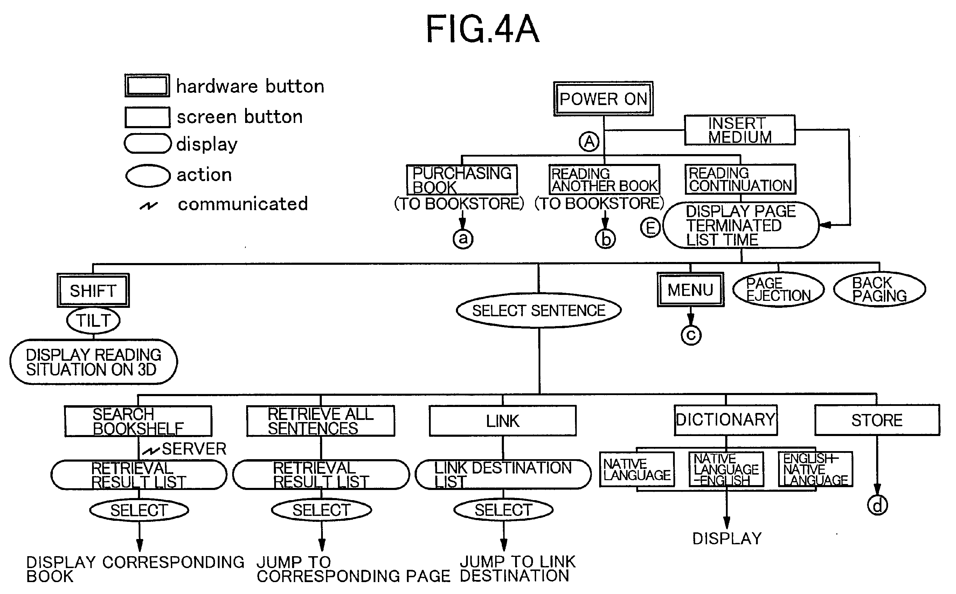

Figs. 4A to 4C and Figs. 5A to 5C respectively show a series of operational procedure in the portable reading terminal 6. The operation of a real button of the terminal (shown by a rectangular double frame), the operation of a button on the screen (shown by a rectangular frame), the contents of display (shown by a frame like a track) and a deed by a user (shown by a elliptic frame) are discriminated by difference in the shape of each frame surrounding each phrase displayed in Figs. 4A to 4C and Figs. 5A to 5C. A letter like N shows that communication is performed.

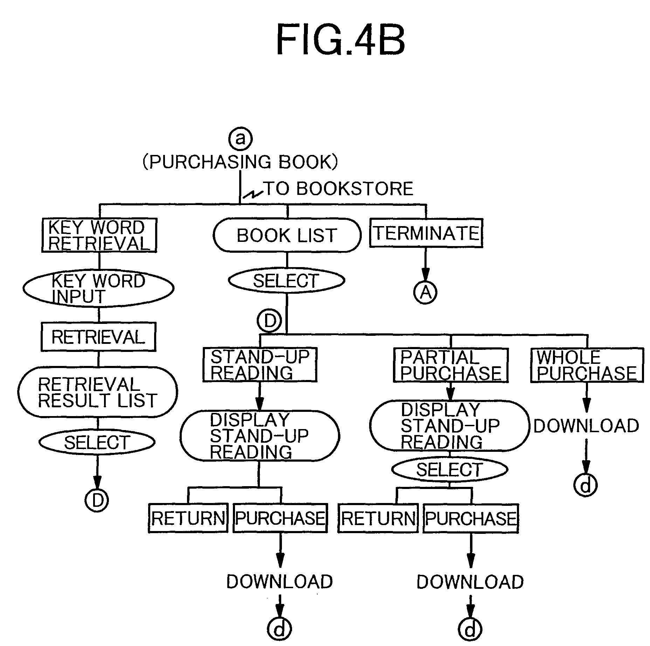

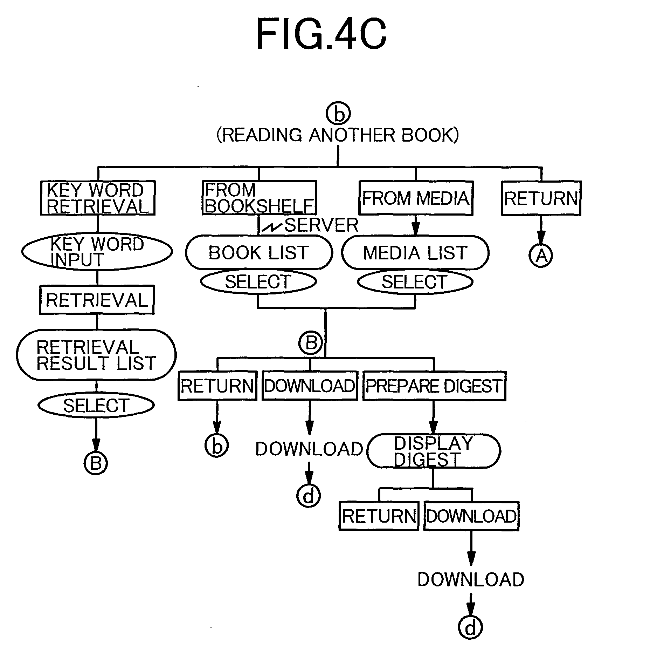

The details of the operational procedure are as shown in Figs. 4A to 4C and Figs. 5A to 5C. Basic flow in the operational procedure will be described below. Fig. 4A shows main flow, and Figs. 4B and 4C and Figs. 5A to 5C show subflow following a predetermined position (an alphabet in a circle) of the main flow.

First, referring to Fig. 4A, the basic operational flow of the portable reading terminal 6 will be described. As shown in Fig. 4A, when the portable reading terminal 6 in this embodiment is powered on by operating the power button 11, the menu screen or guidance is displayed on the liquid crystal display 10. Any of "Purchasing book", "Reading another book" and "Reading continuation" respectively shown in Fig. 4A can be selected on the menu screen and operation can proceed to subsequent flow.

For example, when a button on the screen showing "Purchasing book" of the liquid crystal display 10 is pressed using the pointing device 17 or the touch pen 18, the portable reading terminal is connected to the service provider 1 via a telecommunication line, it is selected whether the screen is terminated and is returned to the last screen, a book is selected based upon a result of the retrieval of books based upon a key word or a book is selected in a book list respectively according to the flow shown in Fig. 4B and succeedingly, any of "Stand-up reading", "Partial purchase" and "Whole purchase" can be selected. "Stand-up reading" means that though a book is not purchased, the contents of the book can be seen as stand-up reading in a bookstore, "Partial purchase" means the specific part of a book is purchased and "Whole purchase" means that the whole book is purchased. In this embodiment, when "Stand-up reading" is selected, the whole book is displayed and when "Partial purchase" is selected, a predetermined part is displayed for stand-up reading. Hereby, as a user can judge whether a book is purchased or not, checking the contents, purchase by mistake can be reduced.

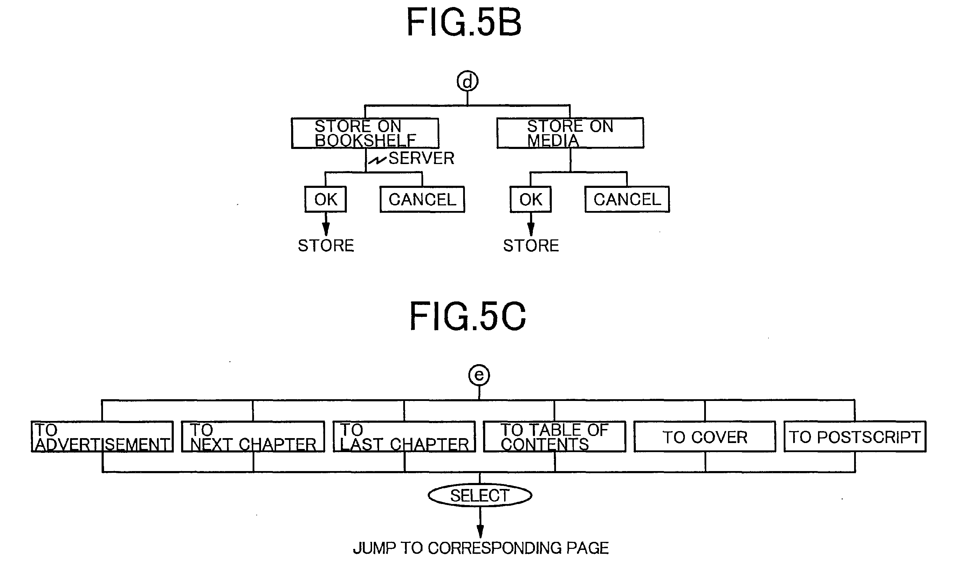

The screen can be returned to the last screen by operating a button of "Return" when a user does not purchase after stand-up reading and when the user selects a button of "Purchase", the screen can proceed to flow shown in Fig. 5B. Also, in the case of "Whole purchase", when "Purchase" is selected, it can be selected referring to Fig. 5B whether a book is stored in the bookshelf server 3 of the provider or is stored on the medium 8 of the reading terminal, the stored book is read, is displayed on the liquid crystal display 10 and a user can read it.

Also, "Reading another book" which is a button on the screen after power on is flow that a desired book selected of books purchased by a user formerly and is read. As books purchased formerly are stored in the bookshelf server 3 or on the medium 8, either storage is accessed, book data is suitably read, is downloaded in the case of the bookshelf server and can be displayed on the portable reading terminal 6. In the case of "Reading another book", screen buttons of "Key word retrieval", "From bookshelf" "From media" and "Return" respectively shown in Fig. 4C are provided. A user can select a book which is stored in a desired place or which can be acquired (purchased) from a desired place by selecting any.

In "Key word retrieval", an input window not shown is displayed on the liquid crystal display 10, a key word is input to a key word input area via an input tablet provided to this input window, retrieval is performed based upon this and the result can be displayed in a list. The "retrieval" includes retrieval via a telecommunication line and retrieval including a medium. "Download", "Prepare digest" and "Return" can be selected by selecting predetermined data in the list.

In case "From bookshelf" is selected, the bookshelf server 3 is accessed via a telecommunication line, "Bookshelf list" including recorded book data from the bookshelf server 3 is displayed on the liquid crystal display 10 and a predetermined book can be selected in the list. Similarly, when "From media" is selected, "Media list" including recorded book data from the medium 8 is displayed on the liquid crystal display 10 and a predetermined book can be selected in the list.

When one of the two is selected, the CPU 21 displays screen buttons of "Download", "Prepare digest" and "Return". Further, when "Download" is selected, the CPU 21 starts downloading and the processing proceeds to recording flow according to the flow shown in Fig. 5B. Also, when "Prepare digest" is selected, the digest of the corresponding book is displayed. A user can instruct the processing to proceed to recording flow according to the flow shown in Fig. 5B so as to start downloading if necessary by checking the contents of the digest and can also check the digest of another book by selecting "Return". Hereby, it can be reduced that another book is downloaded by user by mistake.

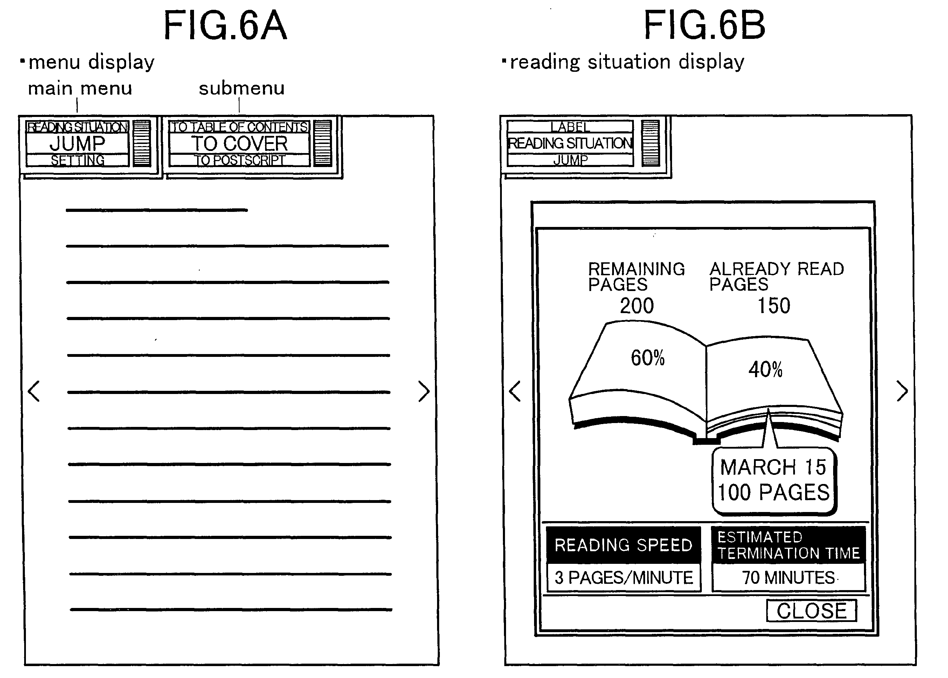

In case the screen button after power on, "Reading continuation" is selected or the medium 8 is installed in the reading terminal 6, it is preceded and "Page terminated last time" is displayed. In this state, page ejection and page reclamation are selected and reading can be continued. Also, except such reading types, when the menu button 13 is operated in this state, screen buttons shown in Fig. 5A are acquired (an example of the screen on which a menu is displayed will be shown in the description of Fig. 6A later). The contents of the screen buttons by the operation of the menu button 13 are "Jump", "Reading situation" (the details will be described in the description of Fig. 6B later), "Label", "Bookstore (retrieval home page)", "Bookshelf (Bookshelf server)", "Scrap", "Purchase", "Setting" and "Terminate".

When "Bookstore" of the screen buttons is selected, the processing proceeds to the flow shown in Fig. 4B and described above, when "Bookshelf" is selected, the processing proceeds to the flow shown in Fig. 4C and described above and when "Jump" is selected, the processing proceeds to flow shown in Fig. 5C, that is, screen buttons such as "To advertisement", "To next chapter", "To last chapter", "To table of contents", "To book cover" and "To postscript" are displayed, a suitable button of them is selected and jump is performed.

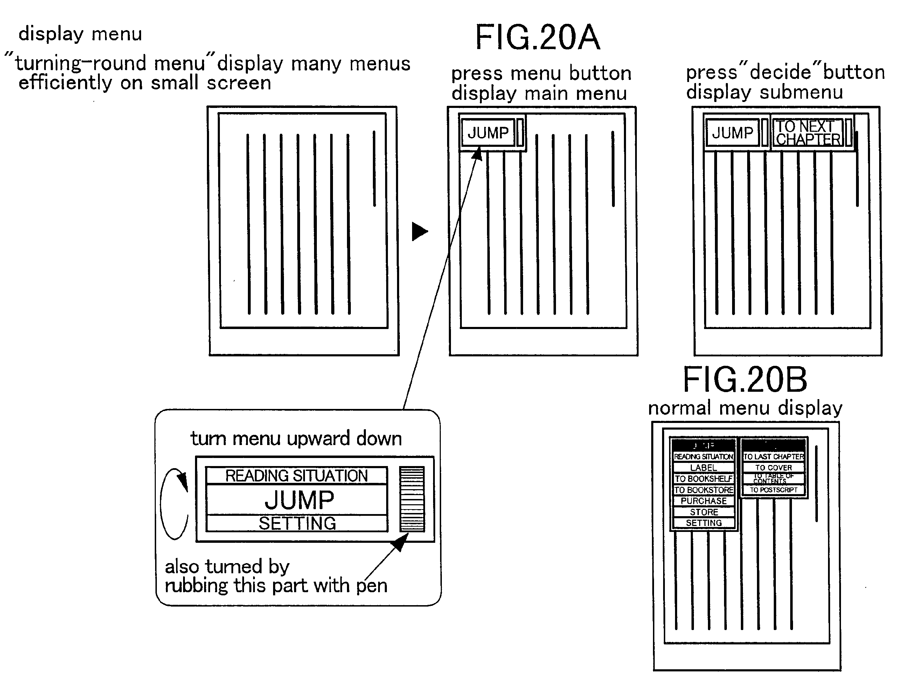

Fig. 6A shows the details of the screen button "Jump". When the menu button 13 is operated, contents at the uppermost level in Fig. 5A are displayed as a main menu as shown in Fig. 6A. A submenu exists as shown in Fig. 5A in the subordinate position of the main menu and these menus have hierarchy structure. In the example of menu display shown in Fig. 6A, "Jump" is displayed as a main menu and "To book cover" is simultaneously displayed on the screen as a submenu. Hereby, a user can select various operation without switching the currently displayed screen. These screen buttons will be further described in Figs. 20A and 20B, Figs. 35A and 35B and Figs. 36A to 36C.

When "Reading situation" is selected in Fig. 5A, the three-dimensional display of the situation of reading is acquired. Fig. 6B shows the details. "Reading situation" is displayed as a main menu on the upper left of the screen, already read pages and the residual pages are displayed on the three dimension together with the respective ratio in the center of the screen and the situation of reading is clarified.

That is, in this embodiment, the CPU 21 instructs to display the quantity of the corresponding book data or the number of all recorded pages in the form of the thickness of the book displayed on the three dimension. The current open position (the position of already read pages or a position being currently read) is calculated based upon the whole quantity of the book data and the position is displayed by the difference in the thickness of the book between the right side and the left side. Therefore, a user can grasp the current position with a sense that he/she actually reads the book.

Also, the CPU 21 of the portable reading terminal 6 measures an interval of time among predetermined times of page ejection operation by a user, calculates its average and detects reading speed and displays this in a predetermined position (field) of the display screen. For example, Fig. 6B shows that the reading speed is 3 pages every minute. Further, residual data quantity is calculated based upon the reading speed or the estimated time of termination is calculated based upon the number of pages and is displayed in the predetermined position (field) of the display screen. For example, Fig. 6B shows that termination estimated time is 70 minutes.

"Label" in Fig. 5A means that an arbitrary page or location of a book is labeled for the reference of reading and thereby, labeling and retrieval can be executed. In the retrieval, a labeled page can be displayed by displaying a label and selecting this.

Also, a procedure for purchase is executed via flow such as it is selected and shown whether a book being currently read is the newest number, a back number or the subscription of the next number in case the book is sold regularly or in series by "Purchase". For example, when a back number is selected, a server that stores the book is automatically accessed via a telecommunication line and a list of back numbers of the book from the server is displayed. The desired back number can be purchased by selecting it in the list.

When the newest number is selected, a server that records the introduction data of the newest number is accessed via a telecommunication line, the introduction information is acquired and can be displayed on the display screen. In case a user sees the introduction data and desires the purchase, the newest number can be purchased by selecting desired data of the introduction data. Also, when the subscription of the next number is selected, a button for selecting whether it is the purchase of the whole book or partial purchase is displayed. Even if any is selected, a predetermined server is accessed via a telecommunication line and after introduction is displayed in the case of the purchase of the whole book or after a list (a table of contents) is displayed and a purchased part is specified in the case of partial purchase, the specified number can be purchased.

When "Scrap" is selected in Fig. 5A, a page being currently read is preserved in a scrap book dedicated to the user in the book server.

In this embodiment, a gradient sensor not shown is provided as shown in Fig. 4A. When the portable reading terminal 6 is tilted, pressing a shift button (not shown) of the terminal (tilt the portable reading terminal 6, bearing a method of tilting a book and searching a page being read, observing where a bookmarker string is put in mind in the case of a paper book), the gradient sensor detects this and the CPU 21 instructs to display the situation of reading as shown as 100 pages on March 15 on the end face of the book in Fig. 6B.

When a page terminated last time is displayed and a suitable sentence or phrase on the page is selected as shown in Fig. 4A, screen buttons of "Retrieve bookshelf server", "Retrieve all sentences", "Link", "Dictionary" and "Store" are displayed as shown in Fig. 4A and as the bookshelf server 3 is accessed in case "Retrieve bookshelf server" is selected and a list of results of the retrieval of the book related to the selected sentence or phrase is acquired, the corresponding book is displayed if suitable one in the list is selected.

Also, in case "Retrieve all sentences" is selected, a list of results of the retrieval of the selected sentence or phrase in all the sentences of the book being read is acquired and if suitable one in the list is selected, a page on which the suitable sentence or phrase is described in the book being read is displayed. As a list of the destinations of a link about the selected sentence or phrase is also displayed in the case of "Link", a page at the destination of a link is displayed if suitable one is selected. Also, in case the destination of a link is a home page, the Internet browser is automatically activated and the home page at the destination of a link is displayed. For "Dictionary", the contents of a dictionary related to the selected sentence or phrase are also displayed.

Next, the whole outline and the concrete contents of the contents display of an electronic book will be described. Information contents proper to the type of a book such as a novel, a newspaper and a magazine are displayed or a function proper to the type of a book is added. In case the type of a book is a novel, the correlation diagram of the characters in the novel is displayed.

Also, in case the novel is a mystery, a function for prohibiting skipping over pages is added to the portable reading terminal 6. Also, in case the novel is a horror novel, the specification of time for reading is added to give a sense of presence, reading in the day time is prohibited, suitable time at night is specified and reading is enabled after the time. Also, in case the novel is a literary novel having contents consistent with a season, a season is designated and reading is enabled only in a season consistent with the season.

In case the type of a book is a newspaper, the headline of a newspaper article and an article every specific title in the headline (an article every single title or suitable number of titles) can be switched. Also, in case the type of a book is a magazine, a suitable sentence is displayed with it enlarged, with it overlapped with the headline (displaying the contents of the headline palely) and with it related to the headline by displaying the headline of the whole magazine and selecting the suitable sentence in the headline.

Next, to explain the concrete contents of advertisement display as the contents display of an electronic book, advertisement can be displayed independent of whether it is related to the contents of the book or not every the page ejection of the book. When suitable advertisement is selected of titles and headlines in a newspaper or a magazine, hyperlink advertisement display that displays advertisement on the front of the display screen is enabled. Advertisement can be displayed on the whole screen by selecting a list for advertisement of titles and headlines in a newspaper or a magazine to display a table of contents of advertisement and selecting suitable one.

Further, the position of advertisement display can be fixed in an upper part, a lower part, a left part or a right part of a page of a book for example. Display consistent with the contents of a page of a book is enabled in a suitable location of the page. A bookmark with advertisement can be automatically inserted on a page being read and terminated. A band with advertisement is put on the cover of a book.

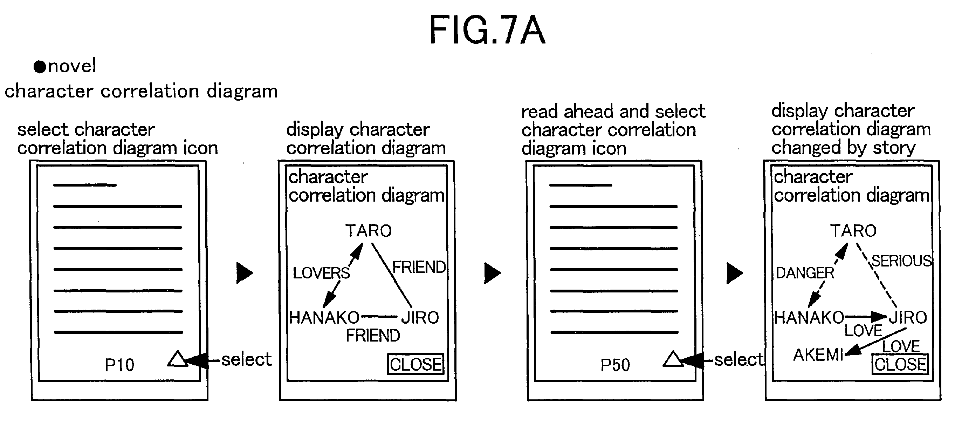

As described above, the outline of the contents display of an electronic book has been described, however, next, the concrete example will be described referring to Figs. 7A to 7D to Figs. 12A to 12C and Figs. 22A to 22C to Figs. 26A to 26C.

As shown in Fig. 7A, in case a book is a novel, when a characters correlation diagram icon put on a page of the novel is selected, the correlation diagram of characters is displayed and the display contents of the correlation diagram consistent with the contents of a story described on the page are selected out of the plural correlation diagrams of characters and are displayed. For example, when a characters correlation diagram icon is selected on a tenth page in Fig. 7A, a correlation diagram of characters showing the relationship among three characters is displayed and when a characters correlation diagram icon is further selected on a fiftieth page, a correlation diagram of characters showing the relationship among four characters is displayed.

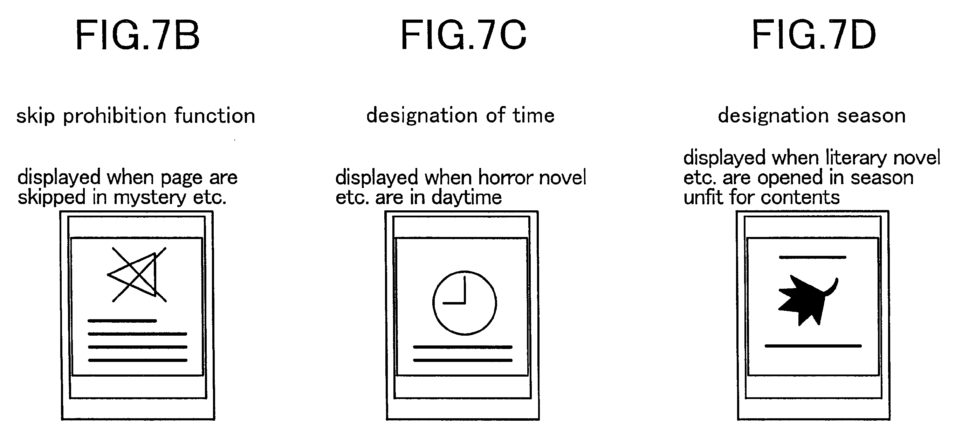

Also, as shown in Fig. 7B, because of the function for prohibiting skipping, when pages try to be rapidly traversed in a mystery and others, a message. that pages cannot be skipped is displayed on the screen and rapid traverse is disabled. That is, in a book in which the function for prohibiting skipping is set beforehand, even if rapid traverse is selected, no rapid traverse is executed and guidance that rapid traverse is prohibited is displayed on the display screen.

Also, as shown in Fig. 7C, when a book tries to be opened in the day time in a horror novel and others, a message that it will be opened after nine o'clock at night is displayed by a time designation function and the time designation function disables the novel to be opened in the day time. Also, as shown in Fig. 7D, when a novel consistent with a season tries to be opened in a season except the season, a message that the ban of the novel will be removed on Sep. 1 is displayed by a season designation function and the season designation function disables the novel to be opened.

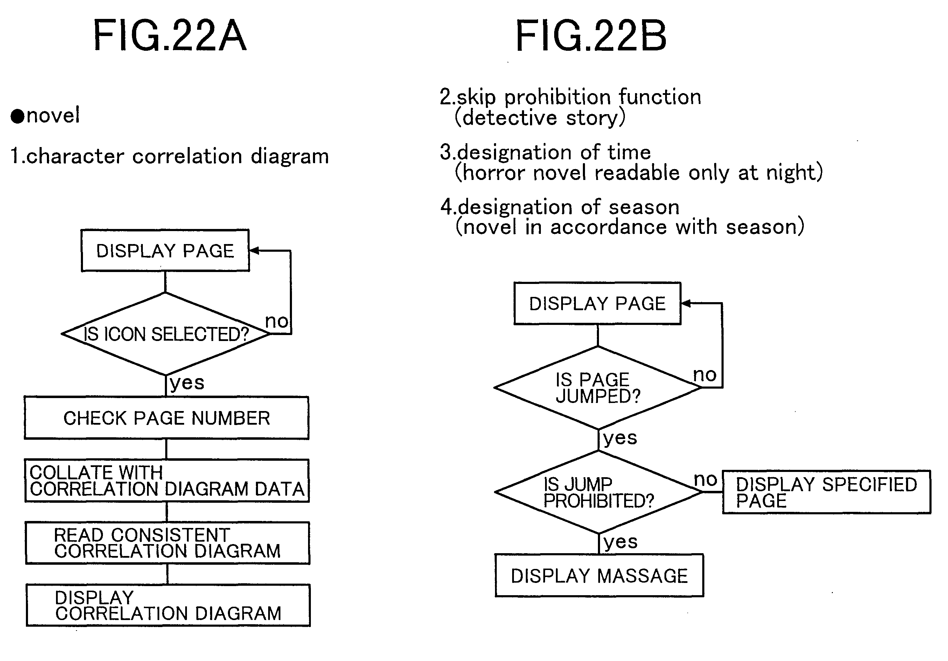

Figs. 22 show the operational flow of the contents display described above. As shown in Fig. 22A, when an icon is selected on a displayed page, a page number is checked, is checked with correlation diagram data, the consistent correlation diagram is read and displayed. That is, the characters correlation diagram function is executed in a book provided with plural characters correlation diagram data and data for specifying a specific characters correlation diagram (a characters correlation diagram icon in this case) out of plural characters correlation diagrams. When a characters correlation diagram icon is selected, the CPU 21 displays the corresponding characters correlation diagram according to the flow.

In the case of the function for prohibiting skipping, time designation and season designation, as shown in Fig. 22B, when jump is performed on a displayed page, it is judged whether a prohibited item exists or not, in case the prohibited item exists, a message is displayed and in case no prohibited item exists, a page for which jump is specified is displayed. That is, in this embodiment, when jump (rapid traverse) is selected, the CPU 21 judges whether a jump prohibition item exists in prohibited item data or not, referring to the prohibited item data recorded in the book data, instructs jump to a predetermined page based upon the judgment, referring to the clock 23 or instructs to display guidance that jump is prohibited.

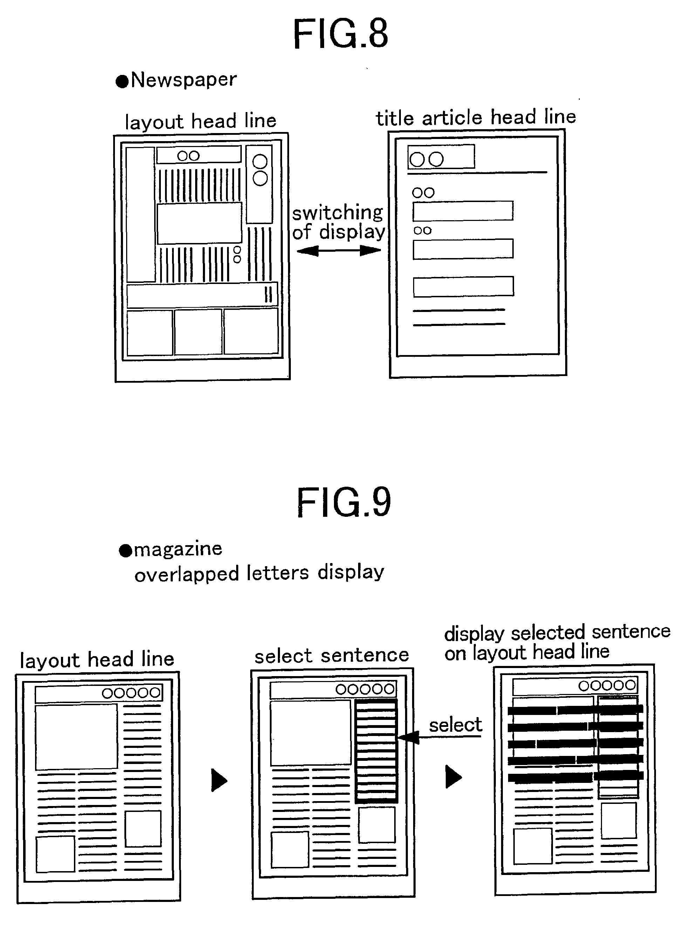

Further, as shown in Fig. 8, in this embodiment, in case a book is a newspaper, the layout display of the newspaper (though an article is also displayed, letters are small and it is difficult to read the letters) and the display of a readable title article can be switched and a desired article can be promptly accessed. For example, in a newspaper and a magazine, the layout is also important information and an element for purchase and a user can grasp the outline to be represented on a page based upon the layout. However, in the portable reading terminal 6 in this embodiment, page space cannot be displayed with readable letters on the small liquid crystal display 10. Then, in this embodiment, two display screens are provided, and layout headline display in which the configuration and the outline of page space can be grasped and title article headline display in which detailed information can be seen can be switched.

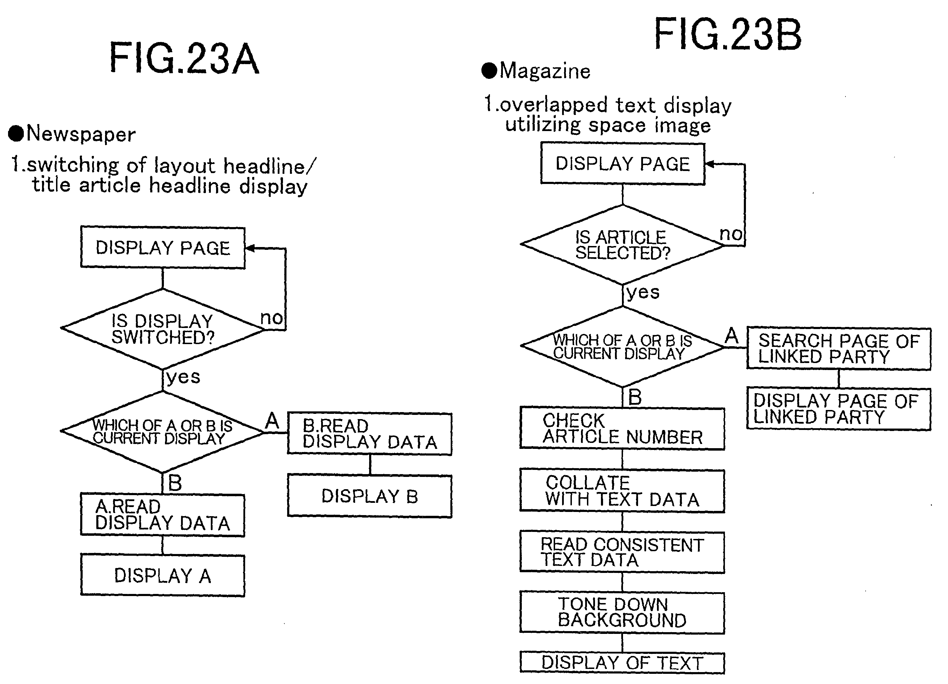

Fig. 23A shows the operational flow of such contents display. As shown in Fig. 23A, when the switching of display is performed on a displayed page, the CPU 21 checks whether the current display is layout headline display (A) or title article headline display (B), in case the current display is layout headline display (A), it is switched to title article headline display (B) and in case the current display is title article headline display (B), it is switched to layout headline display (A). Hereby, a user can easily switch the contents of display.

As shown in Fig. 9, when a layout headline is prepared and a suitable sentence is selected in the headline (letters in this sentence are small and unreadable) in case a book is a magazine, the selected sentence or the selected group of letters can be overlapped on the layout display. At this time, as the contents of the layout display are seen through the selected sentence or the selected group of letters, a desired sentence can be successively selected promptly, utilizing the merit of the layout proper to the magazine and the contents related to this can be read with them enlarged.

Fig. 23B shows the operational flow of such contents display. As shown in Fig. 23B, it is asked whether the selection of an article is performed on a displayed page or not, in case an article is selected, it is checked whether the current display is layout headline display (B) or title headline display (A), in case the current display is title headline display (A), a page at the destination of link is retrieved and displayed and in case the current display is layout headline display (B), an article number is checked, is checked with text data, a consistent data text is read, the background is toned down and the corresponding text is displayed.

That is, for the page space of a magazine, layout is also important and the layout of a picture, a drawing and sentences describing these is important. Book data in this embodiment is provided with plural main screens and the text data of plural articles or plural image data on each main screen as in layout headline display on the left side in Fig. 9. On the main screen, the number (the recorded address) of each article is described in an area of each article allocated on the main screen.

Hereby, when a user selects a predetermined article area, the CPU 21 calls text data corresponding to the selected article area and selected image data and instructs them to be displayed on the display screen. At this time, the CPU 21 tones down the background of layout headline display in case text data is called and overlaps text data on the background. Hereby, the contents of an article can be read, checking displayed text data is an article in what part. Toning down means reducing the depth and the lightness of color. As a result, as the similar action and effect can be acquired by differentiating text data and the background respectively displayed with them overlapped in the depth and the lightness of color, text data may be also toned up.

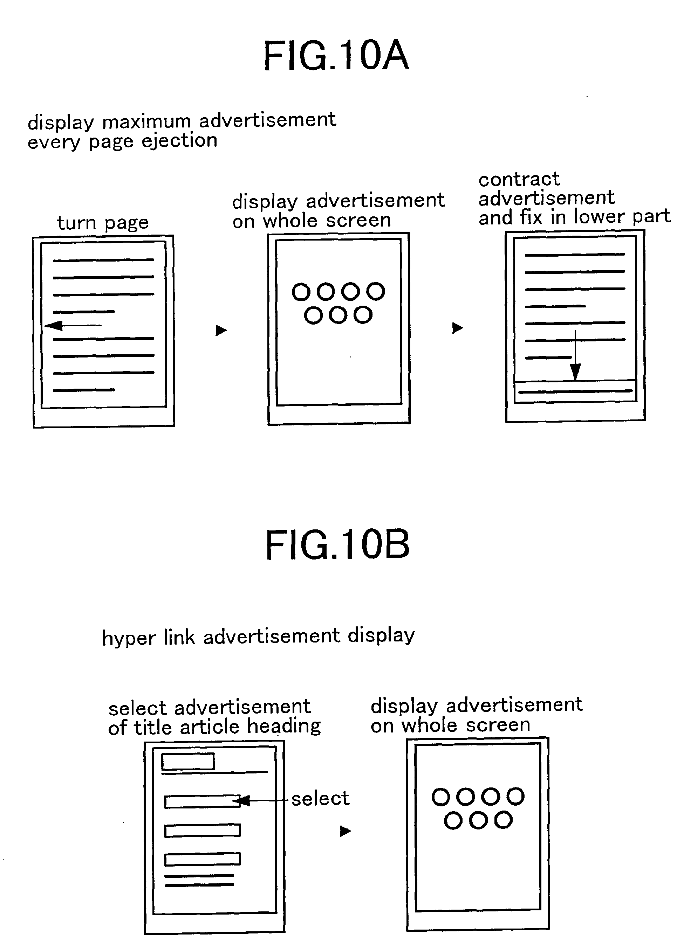

Further, Figs. 10A and 10B to Figs. 12A to 12C show the concrete examples of advertisement display. Heretofore, no electronic book having advertisement has existed, however, in this embodiment, as shown in Fig. 10A, advertisement can be displayed on the whole screen every page ejection. Contracted advertisement can be also displayed in a position in any of all directions on a suitable location of the screen in place of advertisement displayed on the whole screen. In hyperlink advertisement display shown in Fig. 10B, when advertisement under the title article headline of a newspaper is selected, it can be displayed on the whole screen.

For example, in this embodiment, as shown in a drawing in the center of Fig. 10A, advertisement can be displayed on the whole screen corresponding to predetermined time or operation every page ejection. Further, by setting, advertisement is once displayed on the whole screen and afterward, can be displayed in a band on the lower side for example. Further, advertisement recorded in another location via a link allocated to a predetermined area or recorded in a predetermined server via a telecommunication line can be displayed on the whole screen by selecting the predetermined area of title article headlines shown on the left side in Fig. 10B.

As described above, according to this embodiment, as advertisement is displayed every time a user executes a predetermined operation, the efficiency of advertisement is satisfactory. Further, as the provider can easily acquire advertising revenue because the efficiency of advertisement is satisfactory, it can reduce the burden imposed on a user and hereby, can easily acquire users. Also, a user can switch advertisement display to his/her desired display and can acquire information at a low price.

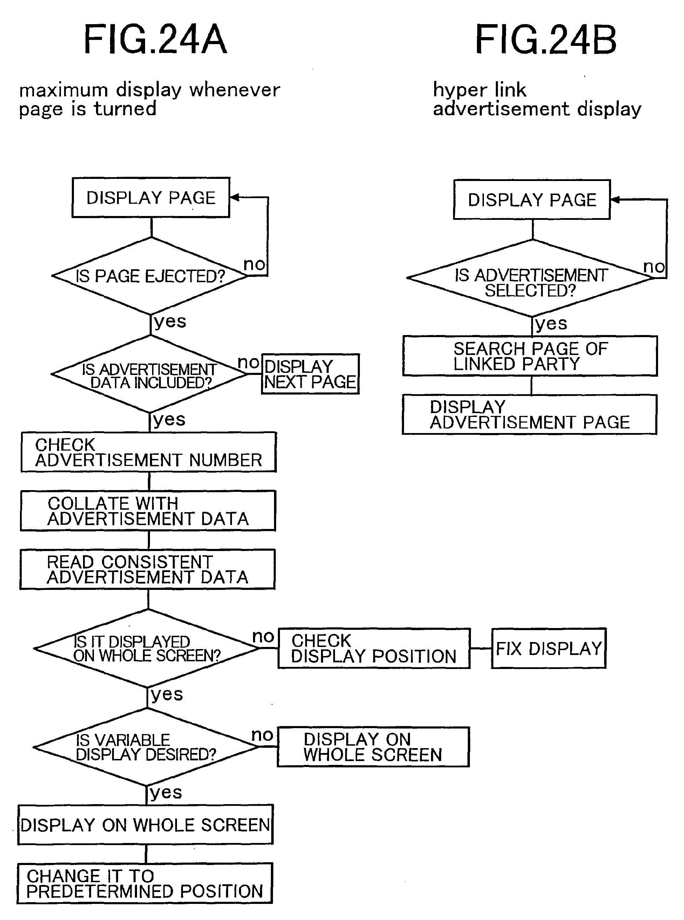

Figs. 24 show the operational flow of such contents display. In Fig. 24A, the flow of maximum display every page ejection is shown. First, when a displayed page is ejected, it is judged whether advertising data exists or not, in case no advertising data exists, the next page is displayed, however, in case advertising data exists, an advertising number is checked, is checked with advertising data, the consistent advertising data is read, it is asked whether the advertisement is displayed on the whole screen or not and in case it is not displayed on the whole screen, a display position is checked and the advertisement is displayed in a fixed position (in a position in any of all directions on the screen). In the meantime, when display on the whole screen is selected, it is asked whether variable display is performed or not, in case no variable display is performed, display on the whole screen is performed and in case variable display is performed, display on the whole screen is varied to display in a predetermined position.

Fig. 24B shows the operational flow of hyperlink advertisement display and in case advertisement is selected on a displayed page, a page at the destination of a link is retrieved and the page of the advertisement is displayed.

That is, in this embodiment, a record number in which advertisement is recorded is recorded every page or in a predetermined area and the CPU 21 displays the corresponding advertising data via this record number. Also, in this embodiment, a display setting window not shown of advertisement can be called and a user can select a desired display method by arbitrarily setting the display setting window. The CPU 21 executes the flow shown in Figs. 24 referring to a set condition when advertising data is displayed. A user may also sequentially select the flow every step.

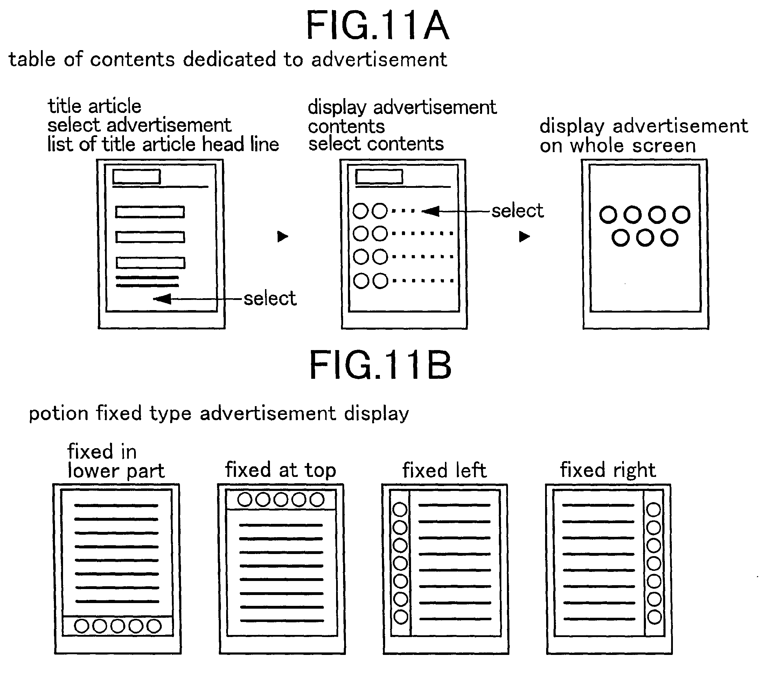

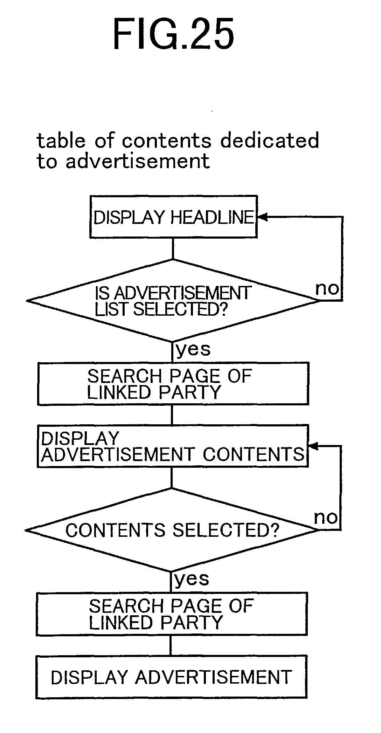

Further, in Fig. 11A, as a table of contents of advertisement in a list is displayed when the list of advertisement which is a table of contents dedicated to advertisement under title article headlines is selected, the corresponding advertisement is displayed on the whole screen when the displayed table of contents of advertisement is selected. Hereby, in case advertisement is also important information for a user as in a dedicated magazine of a personal computer and a car, desired advertisement can be easily acquired out of described advertisement. Fig. 25 shows the operational flow of contents display in a table of contents dedicated to advertisement. According to Fig. 25, when a list of advertisement is selected in a title article headline, a page at the destination of a link is retrieved, a table of contents of advertisement is displayed and when the table of contents is selected, the page at the destination of a link is retrieved again and advertisement is displayed.

Fig. 11B shows that advertisement is displayed with it fixed in any of all directions on the display screen of an electronic book. The operational flow of position fixed-type advertisement display shown in Fig. 11B is equal to the operational flow shown in Fig. 24A. In this embodiment, a position of the display in a band of advertisement can be selected and the direction of letters displayed in the band can be also set. These can be set on the setting window screen not shown as described above.

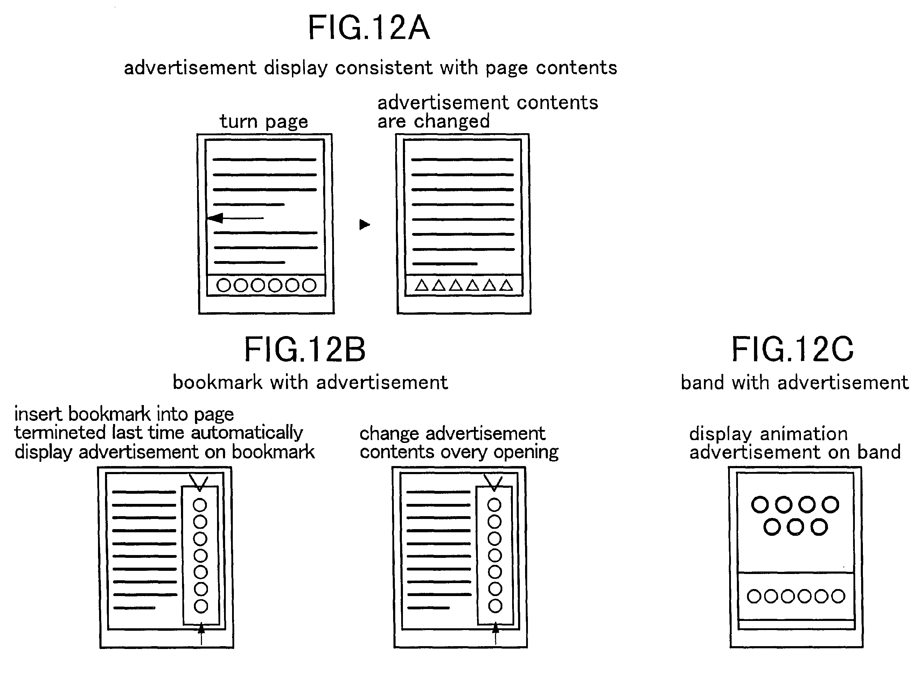

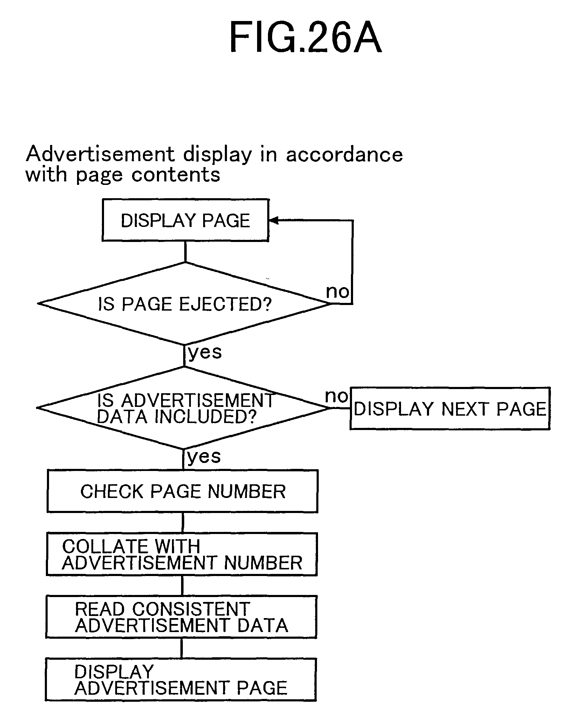

Further, in Fig. 12A, advertisement consistent with the contents of a page of an electronic book is displayed. The larger effect of advertisement can be given to a reader by this display of advertisement. Advertisement may be displayed not only by still letters but by a flowing sentence and animation (it can be applied to all advertising display in this specification). Fig. 26A shows the operational flow of such contents display.

As shown in Figs. 26A to 26C, when a displayed page is ejected, it is judged whether advertising data exists or not, in case advertising data exists, a page number is checked, is checked with an advertising number, advertising data consistent with the advertising number is read and an advertising page is displayed.

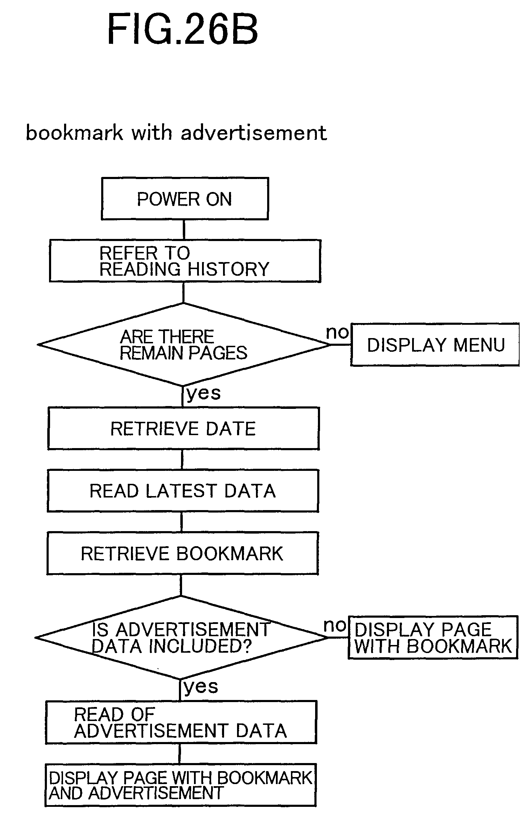

Fig. 12B shows that a bookmarker is automatically inserted on a page being read and terminated and advertisement is displayed on the bookmarker. Every time the page on which the bookmarker is put is opened, the contents of advertisement on the bookmarker may be also varied. Fig. 26B shows the operational flow of such contents display. For example, a drawing on the left side of Fig. 12B shows a state in which a bookmarker is automatically inserted on a page terminated last time and advertisement is displayed on it. A drawing on the right side shows that the contents of advertisement are varied every time a book is opened.

As shown in Fig. 26B, in case the portable reading terminal 6 refers to a reading history after power on and a book is being read, the date is retrieved, the latest page is read and a bookmarker is retrieved. It is not judged whether advertising data exists or not, in case no advertising data exists, a predetermined pattern including a bookmarker is displayed, in case advertising data exists, the data is read and a page including a bookmarker is displayed with the corresponding advertisement included. In this case, advertisement on the bookmarker may be also linked every page and displayed. For the change of the display of advertisement, a display number is given to advertisement beforehand and every time a bookmarker is displayed, advertisement may be also switched or advertisement may be also switched at random.

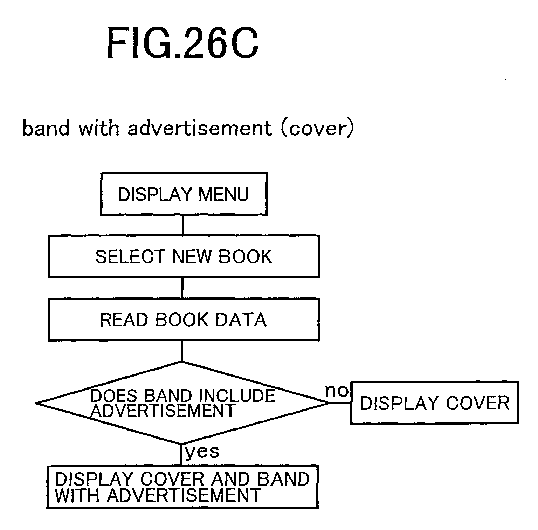

Though some general paper books have a band on the cover, an electronic book such as a novel can also have a band and an electronic book on the band of which advertisement is displayed is shown in Fig. 12C. Fig. 12C shows an example in which animated advertisement is displayed. Fig. 26C shows the operational flow of such contents display. According to Fig. 26C, when a new book is selected in a menu, book data is read, it is judged whether band advertisement exists or not, in case no band advertisement exists, the cover is displayed and in case band advertisement exists, the cover and band advertisement are displayed. The similar action and effect to a normal paper book can be acquired by adding band advertisement as described above.

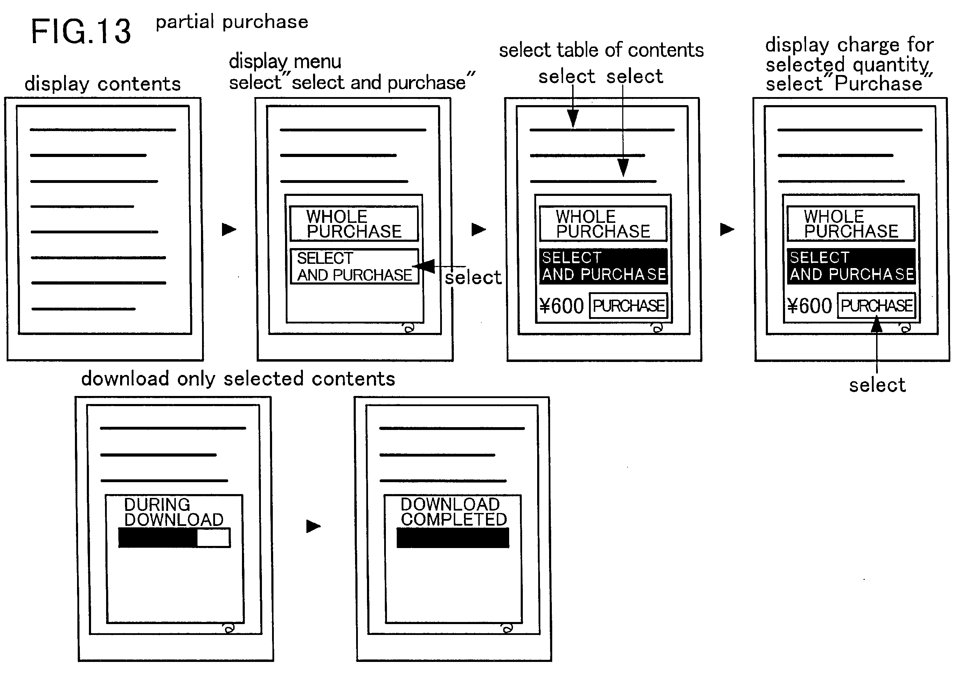

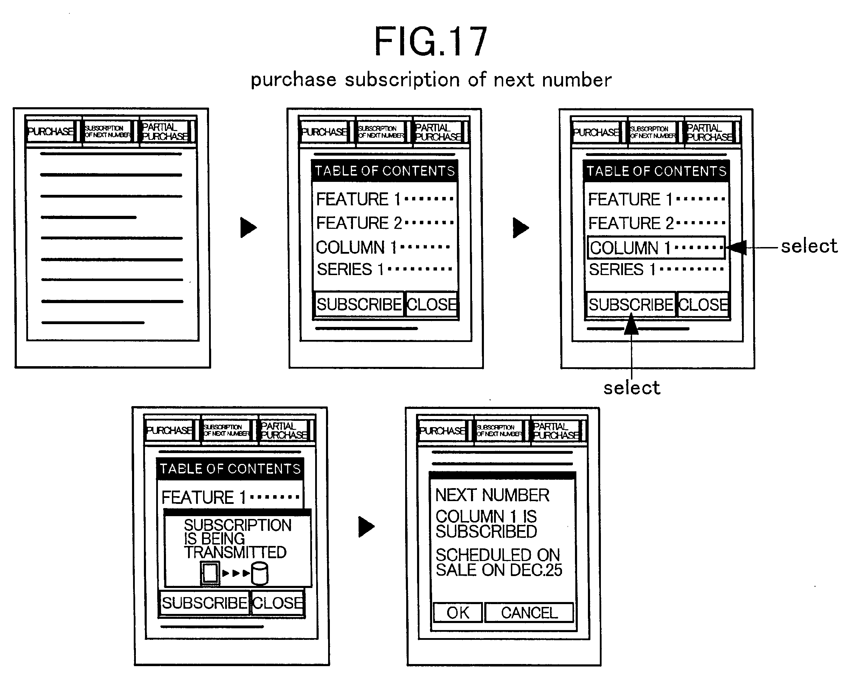

Next, referring to Fig. 13 to Figs. 21A and 21B and Figs. 27 to 34, a concrete example of the operation of the portable reading terminal 6 referred to in the operational flow of the portable reading terminal 6 shown in Figs. 4A to 4C and Figs. 5A to 5C will be described.

"Partial purchase" shown in Fig. 4B can be operated in flow shown in Fig. 13. First, as a charge for a selected item is displayed when a user instructs a table of contents of a book to be displayed, selects "Select and purchase" of "Purchase whole" and "Select and purchase" in a menu and selects the purchased item of items in the table of contents, the user determines purchase referring to the charge, only the selected contents are downloaded and partial purchase is performed.

For example, in Fig. 13, when partial purchase is specified in a menu in a state in which a table of contents of a book is displayed, a partial purchase window is displayed on the display screen with it overlapped. In this partial purchase window, selection keys of "Purchase whole", "Select and purchase" are displayed. The following operation can be executed by specifying either selection key. In Fig. 13, an example of the display screen of flow in which "Select and purchase" is specified is shown.

When "Select and purchase" is specified, each item in a table of contents of a book can be selected and a charge for these selected items is displayed in the partial purchase window. In case a user is satisfied with the selected contents, purchase operation by specifying a purchase key in the partial purchase window, that is, the downloading of data and accounting for this purchase are executed by the service provider. Guidance of a charge for the elapsed time of this purchase operation, the elapsed time of downloading and further, the completion of downloading is displayed in the partial purchase window.

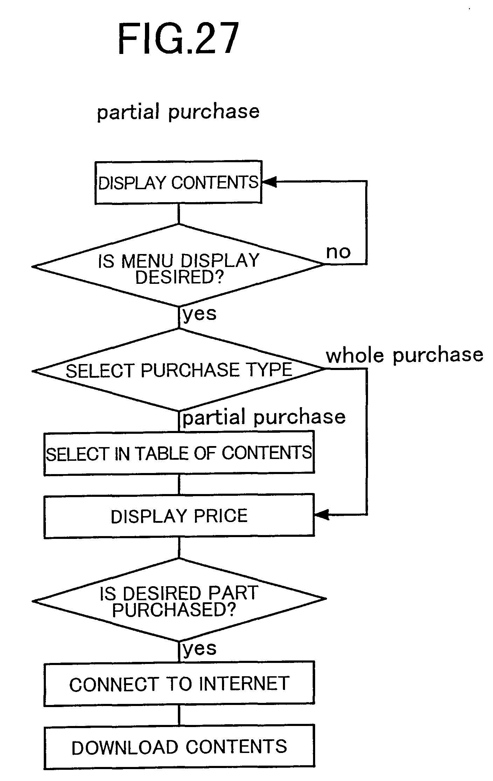

Fig. 27 shows the operational flow of such contents display. According to Fig. 27, as selection items for purchase are displayed when a menu is displayed and it is asked whether purchase is the purchase of the whole book or partial purchase, partial purchase is selected and items to be purchased in a table of contents are selected. When the price is displayed and purchase is selected as when the purchase of the whole book is selected, the terminal is connected to the Internet and the contents are downloaded. When "Purchase whole" is specified, the CPU 21 calculates a charge for selected items skipping a step for selecting a table of contents, displays the price in the partial purchase window and executes the following operation.

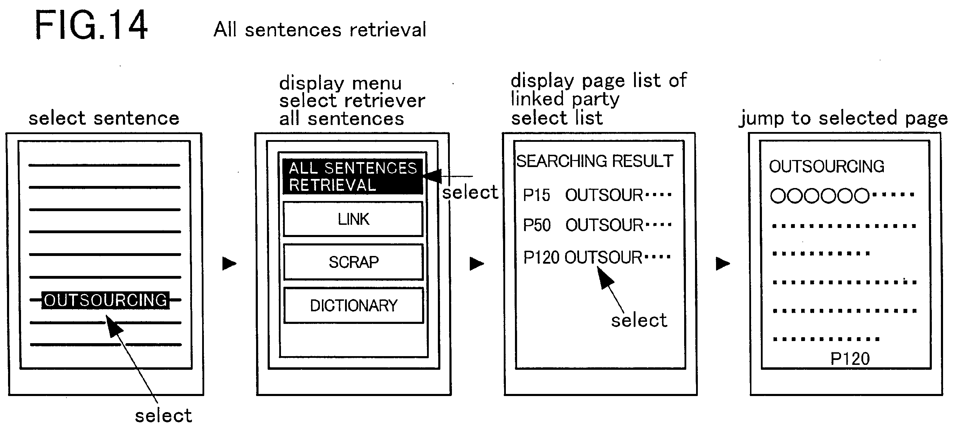

Further, in "Retrieve all sentences" shown in Fig. 4A, as shown in Fig. 14, a sentence or a phrase in a book is selected and "Retrieve all sentences" is selected of "Retrieve all sentences", "Link", "Scrap" and "Dictionary" in a menu. Then, as a selected word "outsourcing" for example is displayed as a result of retrieval together with a page being read of a book, "outsourcing" on a selected suitable page is selected.

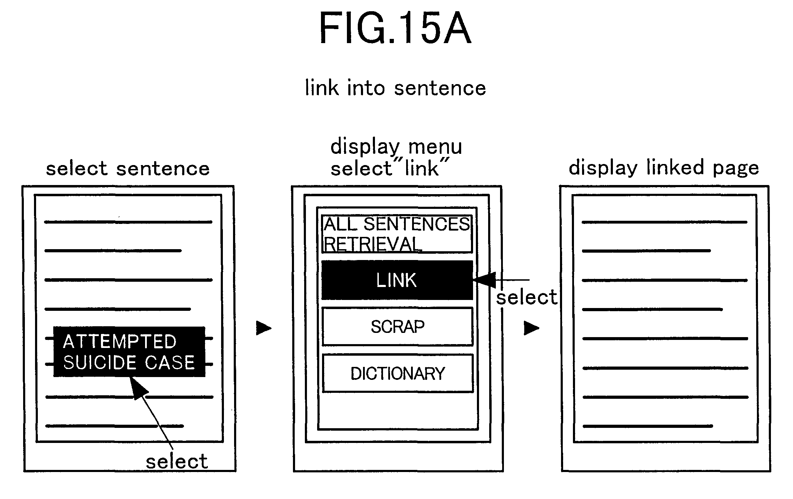

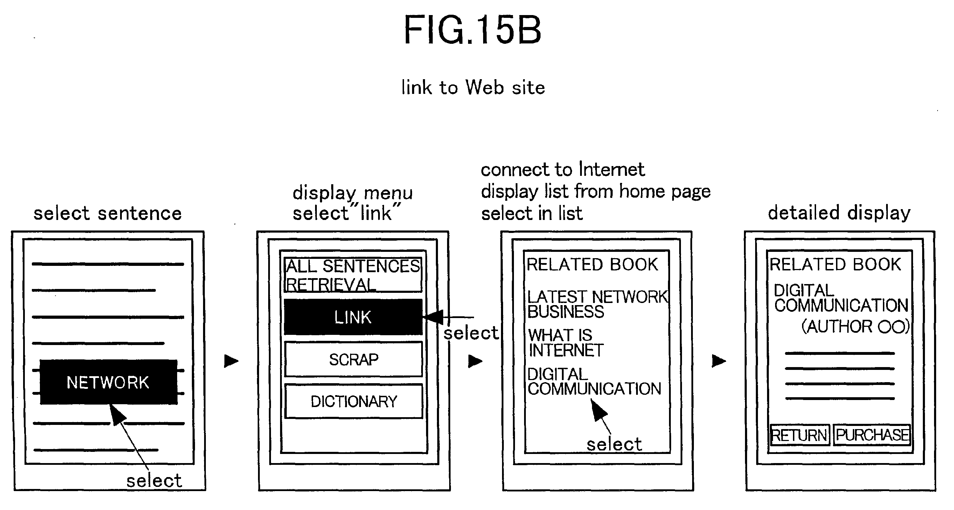

Figs. 15A and 15B show a state in which "Link" is selected in a menu shown in Fig. 14. "Link" shown in Fig. 4A is classified into "Link into sentence" and "Link to Web site", in the case of "Link into sentence", as shown in Fig. 15A, first, a sentence or a phrase in an electronic book, "Attempted suicide case" in this example is selected and "Link" is selected in a menu. Then, a page at the destination linked to the sentence or phrase beforehand is displayed.

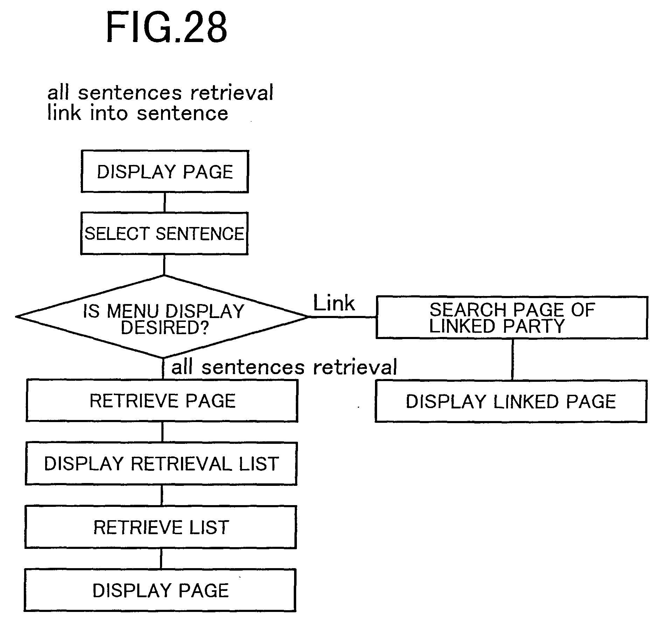

Fig. 28 shows the operational flow of the contents display of "Retrieve all sentences" or "Link into sentence" described above. According to Fig. 28, as a menu is displayed and it is asked whether a link or the retrieval of all sentences when a sentence or a phrase is selected to display a page, a page is retrieved when the retrieval of all sentences is selected, a list of results is displayed and when selection or retrieval is suitably performed in the list, the page is displayed. In the meantime, when the link is selected, a page at the destination of a link is retrieved and the page at the destination of the link is displayed.

In this embodiment, a key word based upon which all sentences can be retrieved is set in a document beforehand. As the CPU 21 displays the key word in contact with the cursor in a state in which it can be selected any time by highlighting for example when a cursor is moved in the document, the desired key word can be specified without requiring fine operation. When the desired key word is specified in this state, a selection window provided with menu display can be displayed.

Fig. 14 shows an example of the display screen of flow in which the retrieval of all sentences is specified. When the retrieval of all sentences is specified, the CPU 21 starts the retrieval and a result of the retrieval is displayed in a list in the selection window. The display of the list can be jumped to the corresponding page by selecting each line. Fig. 14 shows that outsourcing on a 120ith page in the list is selected and the 120ith page is displayed on the display screen by this operation.

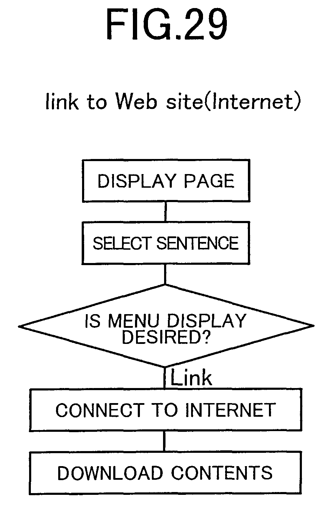

In the case of "Link to Web site", as shown in Fig. 15B, first, a sentence or a phrase in an electronic book, "Network" in this example is selected and "Link" in a menu is selected. Then, as a list connected to the Internet and linked from a home page beforehand is displayed, the details of the list are displayed when a suitable list is selected. Fig. 29 shows the operational flow of such contents display. According to Fig. 29, when a sentence is selected on a displayed page, a menu is displayed, when a link is selected, the terminal is connected to the Internet and the corresponding contents are downloaded.

As described above, in this embodiment, a telecommunication line is automatically activated by link information set to a key word beforehand by specifying a key word (a sentence or a phrase) in an electronic book beforehand, a predetermined home page is accessed and the corresponding related information can be acquired. Further, in this embodiment, specific information can be further acquired based upon the related information. For example, in Fig. 15B, for related information to be linked, a list of related books is displayed. A user selects digital communication in this list, further instructs to display information showing the outline and can purchase this by pressing a purchase key simultaneously displayed. Therefore, a user can acquire related book information and acquire this if necessary. The service provider can also increase chances of purchase by providing this related information to a user.

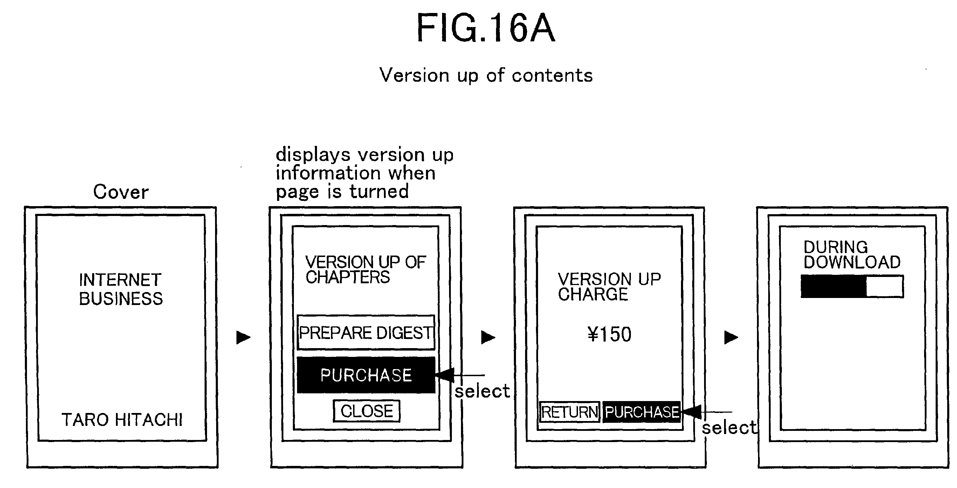

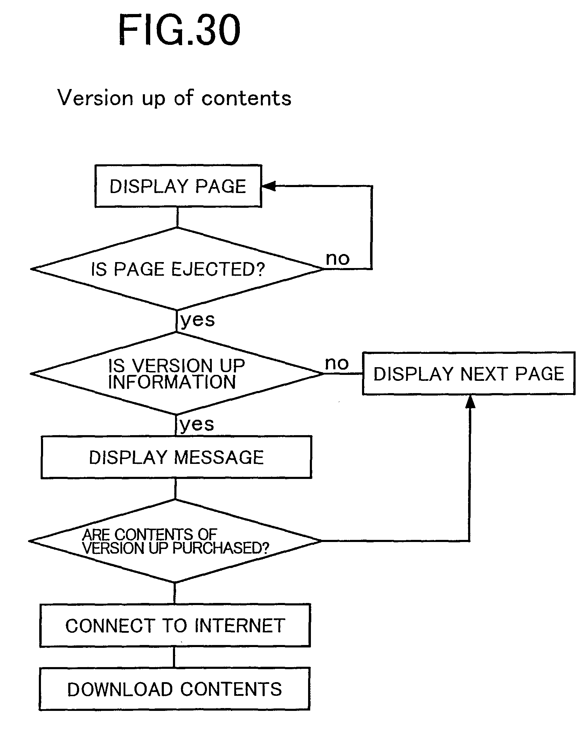

Further, for a concrete example of the operation of the portable reading terminal 6, there is "Version up of contents" shown in Fig. 16A. As a page telling version up is displayed when pages of an electronic book are turned, a charge for version up is displayed when "Purchase" on the screen is selected and when "Purchase" is selected again, the quantity of version up is downloaded from the contents server shown in Fig. 1 to the terminal. Fig. 30 shows the operational flow of such contents display. According to Fig. 30, when contents are received from the bookshelf server and a page is ejected on the displayed page, it is displayed whether version up information exists or not, in case no version up information exists, the next page is displayed, as a message is displayed in case version up information exists, the terminal is connected to the Internet when "Purchase" is selected and contents are downloaded.

Such embedding of "Version up of contents" in an electronic book is executed by a publisher and at the time of publishing in case version up is estimated beforehand or when version up is performed, the quantity of version up is embedded in former book data in a format such as advertisement. Also, service that such version up information is embedded in books stored in the book server may be also performed.

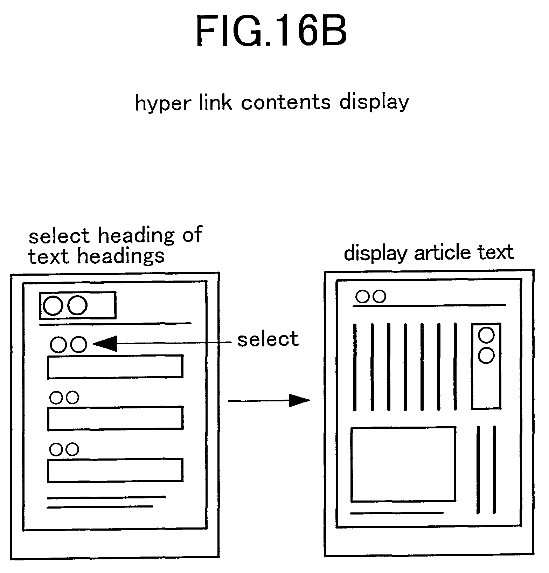

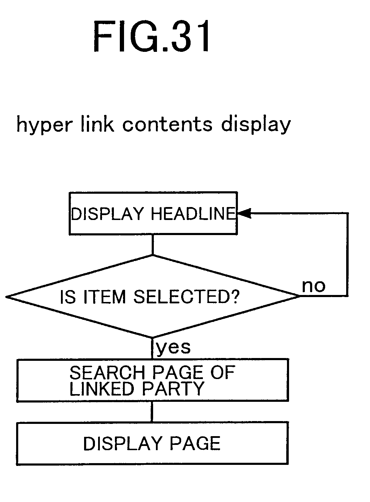

In Fig. 16B, hyperlink contents display is shown and when a headline of the title article headline of a newspaper is selected, an article related to the headline is displayed. Fig. 31 shows the operational flow of such contents display. According to Fig. 31, when an item is selected in the display of a title article headline, a page at the destination of a link is retrieved and the corresponding page is displayed. According to the hyperlink contents display, as a desired article can be easily selected in the minimum information of a title article headline, information interested in a short time can be selected. The article is displayed by selecting this selected article and detailed information can be acquired.

For "Purchase", "Subscribe for next number" and "Partial purchase" respectively shown in Fig. 5A, first, when "Purchase" is selected in a menu on a page of a periodical such as a monthly and a weekly and next, "Subscribe for next number" and "Partial purchase" are selected, a table of contents of the notice of the next publication is displayed in a window. When a purchased item in the table of contents is selected and "Subscribe" is selected, a send message is displayed and finally, the partial purchase of the subscription of the next number is displayed in the window for verification. The subscription is verified by operating "OK" key in the window in the display for verification. Also, the operation till then of the subscription is canceled by operating "Cancellation" key.

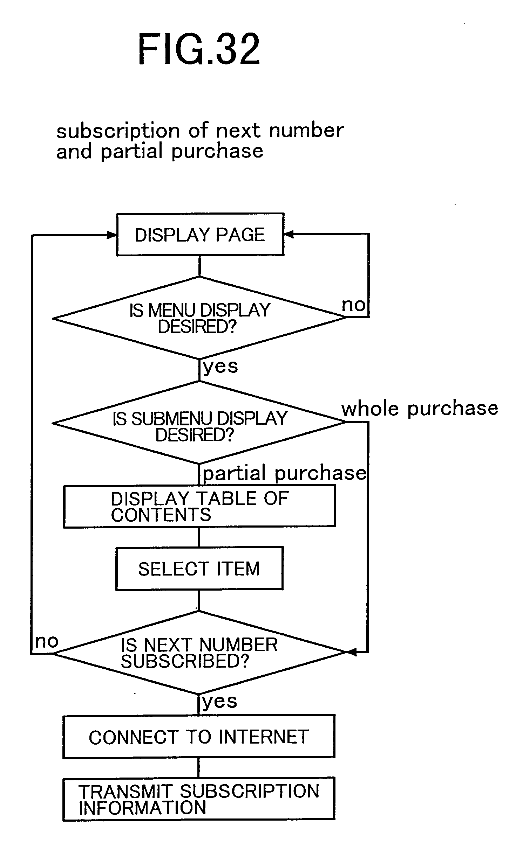

Fig. 32 shows the operational flow of such contents display. According to Fig. 32, when the display of a menu is selected on a displayed page, a submenu is displayed. In this submenu, it is asked whether the purchase is the purchase of the whole book or partial purchase. When partial purchase is selected, a table of contents is displayed, when a suitable item is selected, it is asked whether the next number is subscribed or not and when subscription is selected, the terminal is connected to the Internet and subscription information is sent. In the meantime, when "Not subscribed" is selected, display is performed again. Further, when the purchase of the whole book is selected in the submenu, processing can proceed to a step for selecting whether subscription is performed or not. As described above, in this embodiment, a desired book can be partially or wholly subscribed by simple operation.

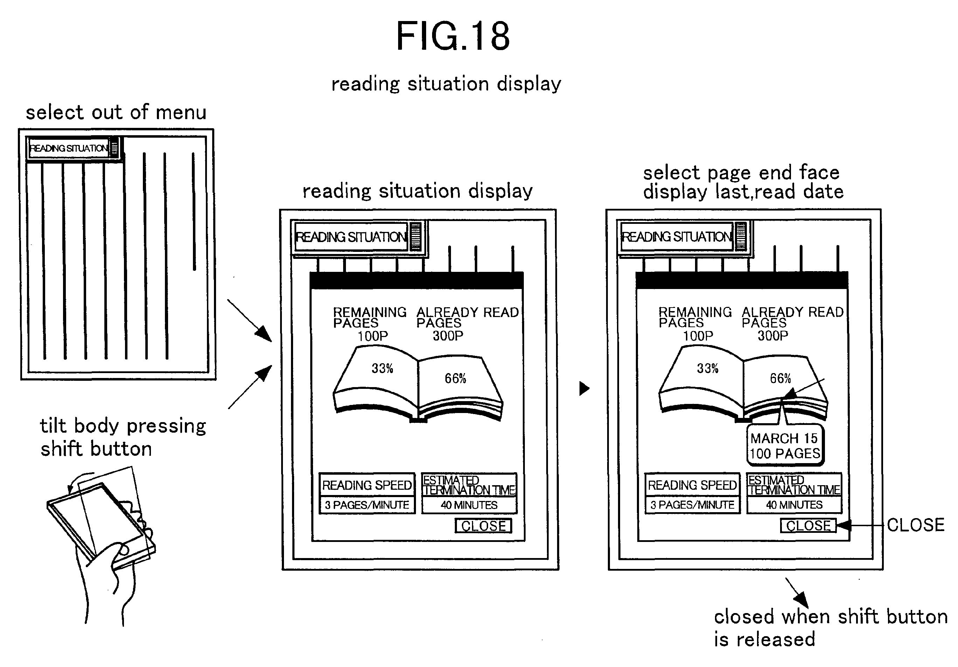

Further, for "Reading situation" shown in Fig. 5A, when "Reading situation" is selected in a menu of electronic books as shown in Fig. 18, already read pages and the residual pages to date are displayed on the three dimension together with the respective ratio as described in relation to Fig. 6. Also, reading speed is detected and the estimated time of termination is displayed. Further, when the end face of the page is selected, the date of the last reading is displayed. When the body of the portable reading terminal 6 is tilted, pressing the shift button of the portable reading terminal 6, the situation of reading is displayed on the screen by the gradient sensor.

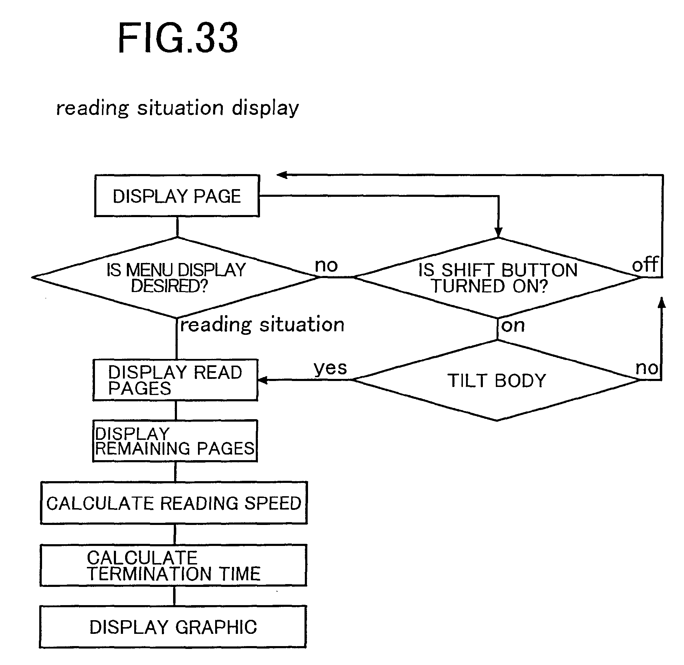

Fig. 33 shows the operational flow of such contents display. According to Fig. 33, when a reading situation is selected in a menu on a displayed page, the current page and the residual pages are acquired, further, reading speed is calculated, termination time is calculated and the numeric values are displayed in a graphic chart. In the meantime, when the body of the portable reading terminal 6 is tilted pressing the shift button in case the reading situation is not selected in the menu, the similar flow to that in case the reading situation is selected is acquired. As described above, in this embodiment, the reading situation can be grasped on the obvious three dimension by simple operation of only tilting, pressing the shift button without operating in the menu.

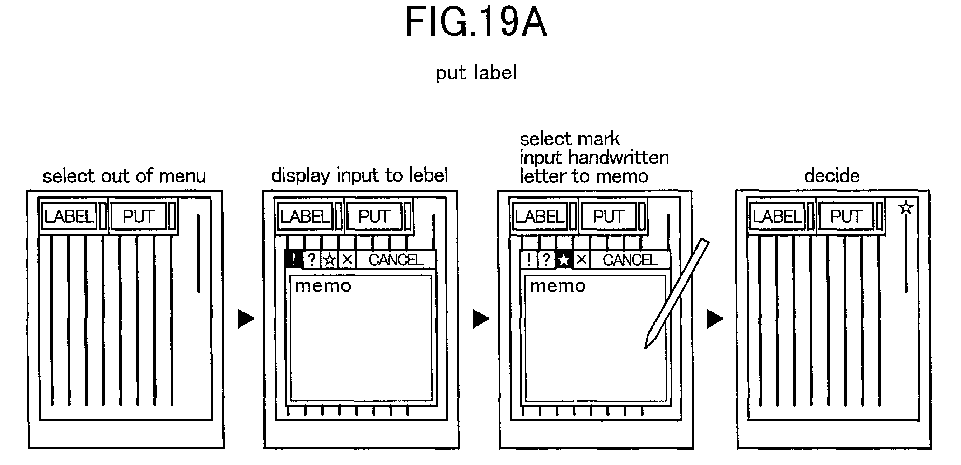

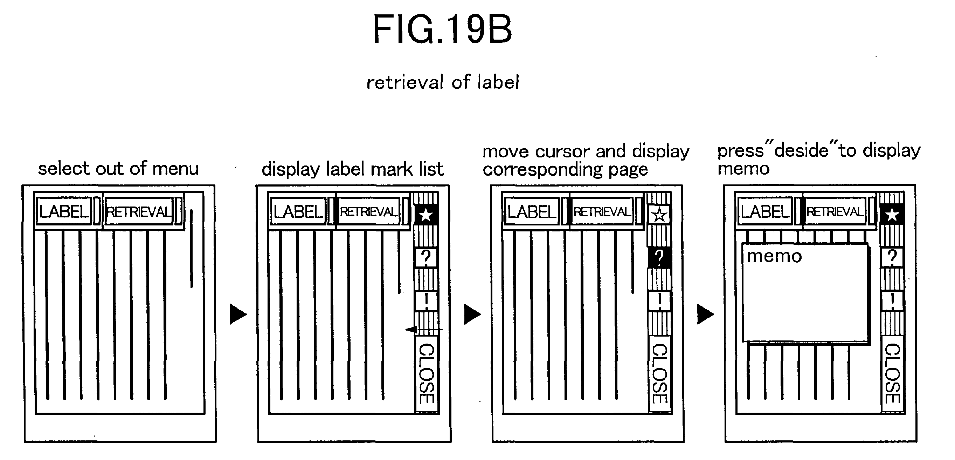

Next, "Label" shown in Fig. 5A has a function for labeling as shown in Fig. 19A and a retrieval function based upon a label as shown in Fig. 19B. First, when "Label" and "Put" are selected in a menu, plural marks of a label and a memorandum filed are displayed in a window. In the label window, plural label memorandums are overlapped, a specific label mark is set for the label memorandum and the label mark is provided so that it is exposed on the plural label memorandums.

A user can instruct to display a label memorandum in an upper position by selecting the specific label mark and to input in the memorandum filed. Further, the user can input a memorandum corresponding to the label, letters "Usable for data" in this example in the memorandum field. Next, labeling is determined pressing the pointing device 17 shown in Fig. 2 and a label can be put on a suitable page. As described above, in this embodiment, not only a label is put on a displayed page but a memorandum can be added to the label.

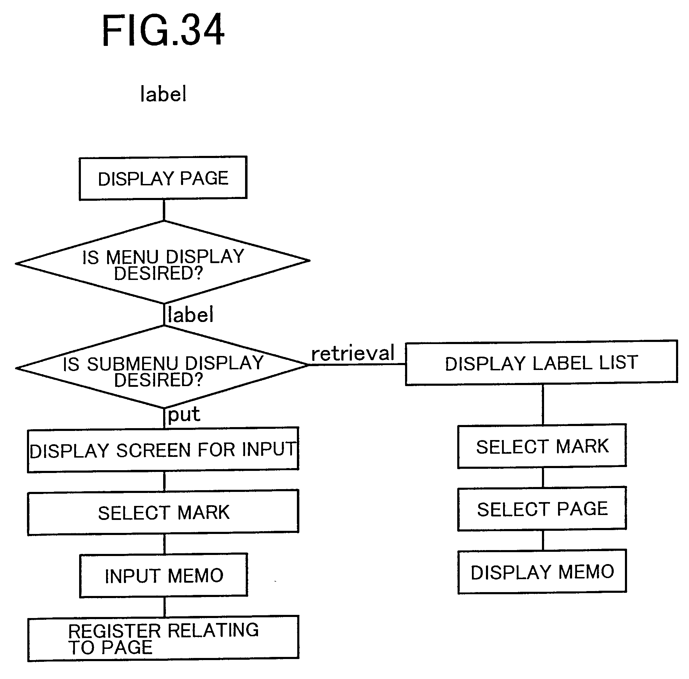

Fig. 34 shows the operational flow of such contents display. According to Fig. 34, when a label is selected on a displayed page in a menu, a submenu is displayed and next, when "Put" is selected, the screen for input is displayed, a label mark is selected, a memorandum is input and is registered with it related to the page. In the meantime, when retrieval is selected in the submenu, a list of label marks is displayed, when a suitable mark is selected, the page is displayed and when a determination button is pressed, the memorandum is displayed.

Next, for retrieval based upon a label, as shown in Fig. 19B, as a list of label marks is displayed when "Retrieve" is selected, a page having a mark is displayed when the suitable mark of the marks is selected. Further, when "Determine" is pressed, pressing the pointing device, a memorandum filed corresponding to the label is displayed and letters manually written are displayed.

Particularly, in this embodiment, when the retrieval is selected, each page is overlapped with it off so that a part on one side of each page is exposed. The label mark is displayed as a flag at the end of the off predetermined page. The corresponding page can be opened by specifying the flag. As described above, in this embodiment, as the specific label mark is put, a predetermined page can be selected in a short time based upon the specific label mark without turning pages until the corresponding page emerges. Also, as a flag is set on overlapped display in which each page is set off, the position of a page on which a label is put can be grasped. As such a label is put in the same way as when a flag is set on a paper book, retrieval can be executed without giving a user a sense of incompatibility. Further, a memorandum recorded on the labeled page can be seen by simple operation.

Further, as shown in Fig. 20A, Figs. 35A and 35B and Figs. 36A to 36C, menu display shown in Fig. 5A is a turning-round menu in which many items are efficiently displayed on the small screen. As conventional type menu display is a pull- down menu in which all items are displayed hierarchically as shown in Fig. 20B, there is inconvenience that the menu display occupies most of the screen and the display screen of the contents of a book is reduced by the quantity. When the menu button is pressed, the main menu shown at the uppermost level in Fig. 5A is turned and the turning-round menu shown in Fig. 20A is individually displayed.

The turning-round menu is a rectangular window provided with a window in which a rectangular rotor is displayed and a rotating dial provided side by side with the window. The rotor is divided into plural in a circumferential direction, a selectable menu item is allocated in this divided area and the contents are described. The corresponding area is arranged in the center of the window and an area on the upper and lower sides respectively adjacent to the area is partially displayed. The rotor can be rotated upward by operating the rotating dial upward and the rotor can be rotated downward by operating the rotating dial downward. An instruction for operation allocated to this area is selected by selecting an area exposed from this window.

The menu is rotated by operating the pointing device 17 shown in Fig. 2 upward or downward, however, the menu is also rotated in case the rotating dial is traced by the pen 18 and in an example shown in Fig. 20A, "Jump" is selected.

Plural turning-round menus can be provided side by side in accordance with the hierarchical structure of operation. That is, when a suitable menu item in a main menu is determined, a submenu is displayed next to the main menu and is turned round (any menu item is selected).

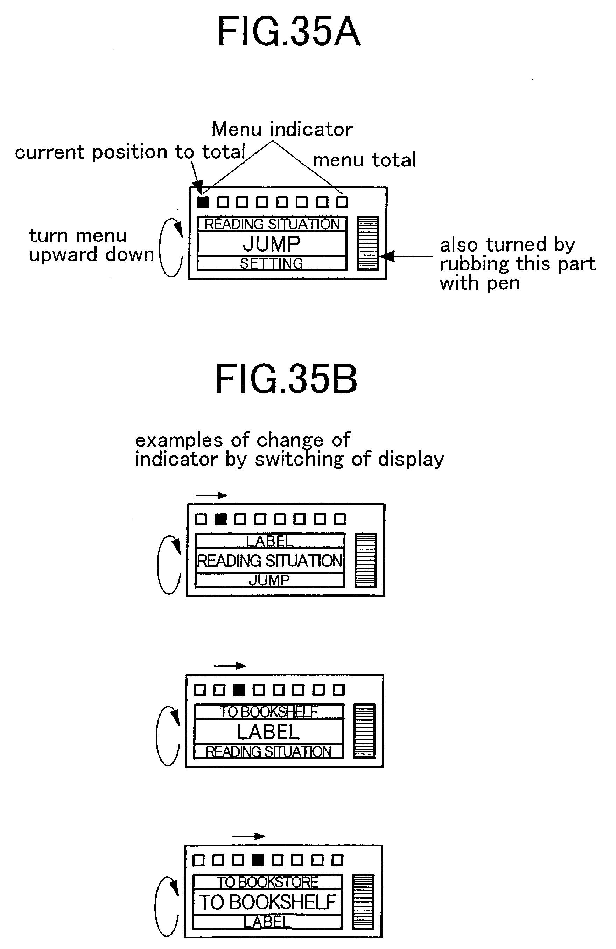

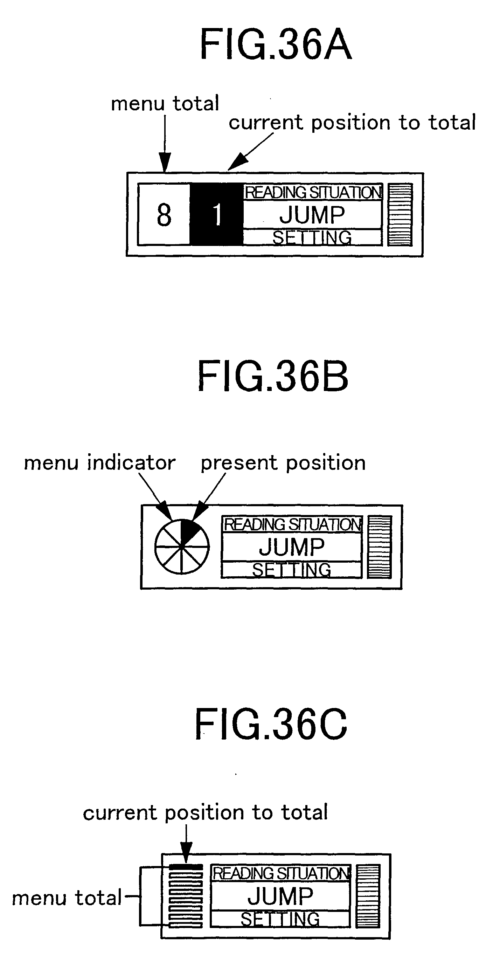

Figs. 35A and 35B and Figs. 36A to 36C show another embodiment of the turning-round menu described in relation to Figs. 20A and 20B. Fig. 35A shows the basic configuration of another embodiment and Fig. 35B shows an operational situation. Also, Figs. 36A to 36C are basic block diagrams showing applied examples of another embodiment shown in Figs. 35A and 35B.

As shown in Figs. 35A and 35B, in this embodiment, a menu indicator is provided on the left or right side along the longitudinal direction of a rectangular window. The rotor provided to the window and the rotating dial provided side by side with the window have the similar configuration to that in the embodiment shown in Figs. 20A and 20B. The menu indicator is provided with lamps by the number of selectable functions allocated to the rotor, each lamp corresponds to the selectable function and when the selectable function is displayed in the center of the window, the corresponding lamp is lit.

Hereby, as shown in Fig. 35B for example, the rotor is turned as shown by each arrow by turning the rotating dial downward and an operational menu item such as "Reading situation", "Label" and "To bookshelf" is displayed. At this time, the menu indicator is moved along the rotation of the rotor from the left to the right as shown by each arrow. As described above, in this embodiment, as the lamps are sequentially lit by the menu indicator corresponding to the menu item of the rotor, the number of operable menu items and the position of the current menu item can be visually recognized and the operation is simpler.

Also, Figs. 36A to 36C show another embodiment of the menu indicator. In the embodiment shown in Fig. 36A, display by a menu indicator is represented by a numeral. In this embodiment, the menu indicator represented by a numeral is composed of a window showing the number of menu items and a window showing the currently displayed menu item number for the total number. The window showing the total number, the window showing the current number, a rotor and a rotating dial are arranged side by side in the axial direction of the rotor. According to this embodiment, the total number of menu items and the position of the current menu item can be known by a numeral.

In an embodiment shown in Fig. 36B, a menu indicator is represented in the form of a circular dial divided into plural radially from the central axis. According to this embodiment, the total number of menu items and the position of the current menu item can be represented with a sense of a clock and in addition, in small space.

Also, in an embodiment shown in Fig. 36C, a menu indicator composed of plural lamps provided side by side in a direction perpendicular to the axial direction of the rotor is shown. This menu indicator has the similar configuration to that shown in Figs. 35A and 35B except that the menu indicators are different in the direction of array. According to this embodiment, as the direction of lit lamps is equal to a direction in which the rotor is turned, the operability and visibility can be enhanced.

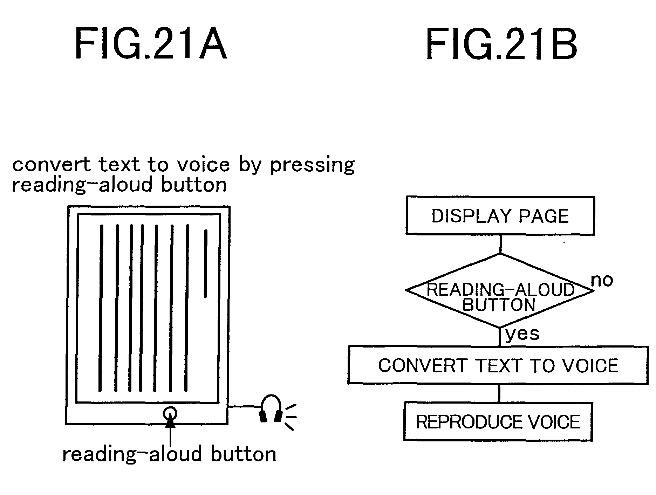

Next, as shown in Figs. 21A and 21B, in case a suitable page of an electronic book is opened, a function for converting the contents of the page to voice and reading them aloud can be provided. When a reading-aloud button 16 is pressed, the text of an opened page is converted to voice and the voice is reproduced.

According to the invention, there is effect that the contents of a book are enriched by adding related information proper to the type of the book such as a novel, a newspaper and a magazine to the text and readability and familiarity are given to a reader.

Also, the effect of linking a book and advertisement can be desired by adding advertisement to the book. At that time, advertisement can be prevented from troubling reading the text of the book by devising how to put advertisement variously.

Further, as the portable reading terminal 6 sends and receives information related to books to/from the book service provider via the Internet, required book information can be suitably and promptly acquired.

Also, in reading and retrieval using the portable reading terminal 6, the small display screen can be efficiently utilized by devising the display of a menu based upon which various operation is executed by the portable reading terminal 6. The situation of reading can be grasped with the similar sense to a paper book by displaying the situation.

## Claims

1. A contents display method of an electronic book system, wherein:
a portable reading terminal receives digitized book contents and digitized related information proper to the book contents via the Internet; and
the related information is displayed together with the book contents by operating a button of the portable reading terminal or operator guidance on the display screen.

2. A contents display method of an electronic book system, wherein:
a portable reading terminal receives digitized book contents and digitized related information proper to the book contents via the Internet;
the layout headline of a newspaper or a magazine of books is displayed;
character data consistent with a headline article is read by selecting the article of the layout headline; and
the consistent character data is overlapped on the layout headline, toning down the layout headline.

3. A contents display method of an electronic book system, wherein:
a portable reading terminal receives digitized book contents and digitized related information proper to the book contents via the Internet; and
every time a page on which the book contents are displayed is turned, advertising information is displayed on the screen.

4. A contents display method of an electronic book system, wherein:
a portable reading terminal receives digitized book contents and digitized related information proper to the book contents via the Internet;
a suitable sentence or phrase is selected on the screen on which the book contents are displayed;
a retrieval list which is a result of the retrieval of the books contents is displayed by selecting retrieval on an operational menu display; and
the corresponding page is displayed by selecting a suitable item in the retrieval list.

5. A contents display method of an electronic book system, wherein:
a portable reading terminal receives digitized book contents and digitized related information proper to the book contents via the Internet; and
the already read pages and the residual pages of the corresponding book are acquired by selecting the display of the situation of reading on an operational menu display on the screen on which the book contents are displayed, and each number and each ratio of the already read pages and the residual pages are displayed.

6. A contents display method of an electronic book system, wherein:
a portable reading terminal receives digitized book contents and digitized related information proper to the book contents via the Internet;
an operational menu display for specifying operation including book purchase operation via the Internet, the transfer operation of a book temporarily deposited with a provider and the jump operation of the display screen is provided on the display screen; and
for the operational menu display, a menu including various operation is turned and any operational menu item is displayed to be selected.

7. An electronic book system, wherein:
a provider server and a portable reading terminal respectively connected via a telecommunication line are provided;
the provider server is provided with a book contents subserver storing digitized book contents and the related information, a bookshelf subserver that temporarily deposits a book from a user and a management subserver that manages the personal information of users; and
the portable reading terminal is provided with CPU, a screen display and a nonvolatile storage having a book contents storage, a reading situation manager and a viewer.

8. A provider server of an electronic book system that provides various information to plural reading terminals via a telecommunication line, comprising:
a book contents subserver storing digitized book contents and the related information;
a bookshelf subserver that receives a book from a user and temporarily deposits it; and
a management subserver that manages the personal information of users.

9. A contents provision method of an electronic book system that provides various information to plural reading terminals via a telecommunication line, comprising:
a step for accepting a request for the purchase of a digitized book from the reading terminal;
a step for supplying the digital information of the book to the reading terminal based upon the acceptance of the purchase;
a step for accepting a request for the temporary deposit of the purchased book from the reading terminal and storing this book information; and
a step for accepting a request for providing the temporarily deposited book from the reading terminal and providing the digital information of the book to the reading terminal.
